# EUROPEAN PATENT APPLICATION

(11) **EP 4 614 746 A1**
(43) Date of publication of application: **10.09.2025**
(21) Application number: 23884014.4
(22) Date of filing: 27.02.2023
(51) Int. Cl.: H02G 7/16, H02G 7/12, H02G 7/14

(54) **ANTI-ICING AND DEICING DEVICE BASED ON SUDDEN CHANGE IN CENTER OF GRAVITY, SPACER, SYSTEM, AND ANTI-GALLOPING SYSTEM**

(30) Priority: 31.10.2022 CN 202211351458
(71) Applicant: Li, Hequan, Taiyuan, Shanxi 030006 (CN); Shanxi Huazhi Power Grid Anti-Icing and Deicing Science and Technology Co., Ltd, Taiyuan, Shanxi 030000 (CN)
(72) Inventor: YANG, Yu, Taiyuan, Shanxi 030006 (CN); WANG, Lei, Taiyuan, Shanxi 030006 (CN); REN, Chunguang, Taiyuan, Shanxi 030006 (CN); ZHANG, Baifu, Taiyuan, Shanxi 030006 (CN); ZHAO, Zhen, Taiyuan, Shanxi 030006 (CN); FENG, Jie, Taiyuan, Shanxi 030006 (CN)
(74) Representative: Wang, Bo
(86) International application number: PCT/CN2023/078550
(87) International publication number: WO 2024/093066

(57) **Abstract**

The disclosure relates to the technical field of anti-icing and de-icing of an overhead transmission line or a railway contact system, and provides a mechanical anti-icing and de-icing device fixedly installed on the overhead transmission line or the railway contact system. The device comprises a base, an electric driving assembly, a weight block and a potential energy module comprising an elastic element. The electric driving assembly comprises a clutch mechanism and a motor. When the clutch mechanism is in an engaging state, the electric driving assembly drives the weight block to generate displacement relative to the base, and when the clutch mechanism is in a separation state, the electric driving assembly cuts off driving to the weight block. When the clutch mechanism is engaged, the potential energy module is used for accumulating potential energy when the weight block generates displacement relative to the base; and when the clutch mechanism is separated, a driving force of the electric driving assembly on the weight block is cut off, the potential energy contained in the potential energy module is rapidly released, so that the weight block moves quickly, thus causing the whole gravity center of the device to suddenly change, forming vibration to be transmitted to the overhead transmission line, so that the icing is removed.

## Description

### CROSS-REFERENCES TO RELATED APPLICATIONS

The present disclosure claims the priority of the Chinese patent application filed on October 31st, 2022 to the Chinese Patent Office with the application number of 202211351458.2 and the title of "ANTI-ICING AND DE-ICING DEVICE, SPACER AND SYSTEM BASED ON SUDDEN CHANGE OF CENTER OF GRAVITY, AND ANTI-GALLOPING SYSTEM", which is incorporated herein in its entirety by reference.

### TECHNICAL FIELD

The present disclosure relates to the technical field of displaying and, more particularly, to a display base plate, a preparation method therefor and a display panel. The present disclosure relates to an anti-icing and de-icing technology for overhead transmission lines or railway contact systems.

### BACKGROUND

Icing problem of overhead transmission lines has always been one of serious natural disasters in power systems at home and abroad. Heavy icing on the overhead transmission lines may cause a serious problem that safe operation of power grids is affected by tower falling, line breakage, and the like, and the falling off of icing may also cause line de-icing jump, resulting in conductor burning, fault tripping, and the like. Affected by climatic conditions, micro-topography, micro-meteorology and large-scale power grid construction, icing disasters have occurred frequently in recent years. In many regions, the load of transmission lines has been increased due to snow and icing, resulting in tower tripping, fault tripping and other events and huge economic losses.

Generally speaking, an icing phenomenon of conductors is caused by some specific meteorological reasons, mainly including temperature, humidity, cold and warm air convection, circulation, wind speed, and other factors. Super-cooled water droplets in the atmosphere are extremely unstable in liquid form for lacking of crystal nucleus. When the super-cooled water droplets fall on a conductor, the conductor will serve as the crystal nucleus. Meanwhile, with the effect of heat exchange, the super-cooled water droplets quickly condense and adhere to the conductor to form icing. From the formation mechanism, the icing may be divided into the following types. (1) Water vapor in the atmosphere adheres to the conductor when the water vapor is supersaturated, and forms radial crystals as rime after sublimation and condensation. During the formation, water droplets freeze before being closely combined with each other, and there are many gaps or bubbles inside the water droplets, so that the rime has a small density, is relatively loose, and has a relatively weak adhesion to the conductor. (2) The super-cooled water droplets in the atmosphere form clear, smooth and transparent icing on a windward side of the conductor as glaze. During the formation, the water droplets freeze after being closely combined with each other, so that the formed icing is smooth and compact, has a high density, and has a strong adhesion to the conductor. (3) The super-cooled water droplets form alternately overlapped transparent and non-transparent or frosted glass-like ice layer on the windward side as mixed ice, and such ice coating has a high density, and has a relatively strong adhesion to the conductor.

### SUMMARY

### (I) Technical problem to be solved

Harm of icing on an overhead transmission line mainly includes two aspects: the first one is that a thickness of the icing greatly exceeds a design standard, which may lead to serious overload of the transmission line, resulting in tower falling and line breakage; and in the other one is that, during de-icing, the line is forced to stop due to line de-icing jump, or conductor fittings and other equipment are damaged due to unbalanced de-icing of a conductor. The harm of icing is obvious, and people are also trying to find an economical, environmentally friendly, operable and practical method to prevent and handle the icing. At present, anti-icing and de-icing methods for the transmission line mainly include thermal de-icing, manual or mechanical de-icing, lyophobic and hydrophobic coating, blasting de-icing, natural passive de-icing, and the like. In addition, electric pulse de-icing, pulley scraping, electromagnetic impact de-icing, robot de-icing, laser de-icing, and the like have also developed rapidly. Although these methods have their own characteristics, there is still a lack of an economical, practical, safe and effective de-icing method, and the research on this issue has always been one of the hot spots in the field of power transmission.

The icing of the overhead line requires two conditions: one condition is unchangeable or difficult to change, such as temperature, humidity, wind speed, and other meteorological conditions, and obviously, once a line route is determined, the meteorological conditions can hardly be changed unless the line route is selected again, which will be costly. The other condition is that a process of increasing and accumulating the thickness of the icing is also needed after meeting the corresponding meteorological conditions, which is namely a development process of a certain time span under a joint action of many factors. The icing caused by such factors may be used for anti-icing and de-icing to some extent, which mainly includes two aspects: (1) a necessary heat exchange process in which super-cooled water droplets or solid-liquid mixtures in the atmosphere adhere to the conductor, without which the super-cooled water droplets or the solid-liquid mixtures in the atmosphere cannot form a cumulative effect on the conductor by freezing; and (2) a necessary attachment or adhesion between icing layers on the conductor. The conditions of icing generation are obtained according to the above analysis, and corresponding anti-icing and de-icing work may be considered in two aspects: (1) the heat exchange process needed for the super-cooled water droplets or the solid-liquid mixtures in the atmosphere to adhere to the conductor is destroyed, including common methods of critical current method, photothermal method, electrothermal coating and other thermal anti-icing methods; and (2) the necessary attachment or adhesion between the icing layers on the conductor is changed, including common methods of various hydrophobic and lyophobic coatings, various thermal de-icing methods, various mechanical de-icing methods, and the like. Based on the above condition (2) of icing generation, it is an obvious conventional idea to apply a direct force on the icing of the conductor to destroy the icing, it is a conventional practice to invent a mechanical de-icing device (or a robot de-icing device) that works in an equal potential field (or a ground potential field) of the conductor, and the present disclosure in this aspect has always been a hot and difficult research. The mechanical anti-icing and de-icing device may be divided into a mobile de-icing device and a (fixed) de-icing device with a fixed installing position according to whether an installing position of the mechanical de-icing device relative to the conductor (or the overhead ground line) is changed during working. For the mobile de-icing device, the de-icing device applies a force on the icing on the conductor by a mechanical device in a reciprocating process on the conductor to destroy the icing layer, thus realizing a de-icing function. Because the working mode is simple, direct and obvious, most of the mechanical de-icing inventions disclosed at present focus on the mobile de-icing device. However, the difficulties in the realization of the device are obvious, and mainly include two aspects: (1) it is difficult to supply energy, and on-spot energy acquisition and battery replacement are both difficult; and (2) it is difficult to overcome inherent obstacles of the overhead line, and the reliability problem is caused by the difficulty. There are a few of researches on the fixed de-icing device, and the fixed de-icing device mainly vibrates the conductor through mechanical vibration, so as to shake off the icing on the conductor. However, once the icing is generated on the conductor, especially the icing is rime or mixed ice, due to a very compact adhesion, if the icing is simply destroyed by vibrating the conductor, an amplitude (or a force acting on the conductor) needed for vibrating the conductor will be extremely difficult to realize, and in addition, due to a very limited de-icing range, if the devices are distributed and installed along the overhead line, a number of the devices needed will be very large, resulting in a high economic cost. Therefore, a number of related documents about a mechanical anti-icing and de-icing device with a fixed installing position are very limited. In fact, in a continuous accumulation and formation process of icing, there is a detail that has been ignored by existing documents, that is, in the formation process of icing, although the icing condensed on the conductor (or the overhead ground line) by super-cooled water is closely adhered, in a process that the super-cooled water dripping on the conductor (or the overhead ground line) has not been condensed from a liquid into a solid, a relatively small vibration amplitude can realize a wide range of anti-icing and de-icing, so that the anti-icing and de-icing can be realized or the severity of icing can be reduced with relatively acceptable level of energy consumption and number of devices. By making full use of the necessary time process of the gradual growth and accumulation of the icing layer on the conductor, and disturbing or destroying the accumulation conditions or process of icing, the anti-icing and de-icing can be realized or the severity of icing can be reduced. By further analyzing the mechanism and process of icing on the conductor, it can be seen that the mobile de-icing device pays more attention to de-icing, which is a measure after the event, while the fixedly installed de-icing device may be used for anti-icing, which is a measure during and before the event, thus providing a feasible idea for adopting an anti-icing and de-icing method with a fixed installing position.

Based on the above analysis, it is feasible to install the mechanical anti-icing and de-icing device with the fixed installing position on the overhead line in a distributed way, which is similar to a traditional manual de-icing principle, but compared with manual de-icing, the device can also improve the automation degree and work efficiency of anti-icing and de-icing to a certain extent. The difficulty mainly focuses on how to invent an anti-icing and de-icing device with low energy consumption, high efficiency, high reliability, high intelligence and full compatibility with an existing tower line system under an actual situation of extremely harsh objective conditions. Generally speaking, the mechanical de-icing device, whether mobile or fixed, must have a certain energy supply to complete the anti-icing and de-icing functions. However, because the mechanical de-icing device and the conductor (or the overhead ground line) are in the same equal potential field (or ground potential field), energy acquisition is not only very difficult, but also extremely limited. Inventing the mechanical anti-icing and de-icing device with the fixed installing position that meets field practice must be based on an objective constraint that actual energy acquisition is extremely limited, it is necessary not only to deeply analyze the formation mechanism and process of icing, but also to comprehensively consider various objective factors that affect anti-icing and de-icing effects, and only in this way can the working efficiency of the device be fully exerted under various working conditions. According to various factors, works of the present disclosure mainly include the following six aspects: (1) a time gap in the condensation from the super-cooled water droplets into the icing is fully utilized, and the measure before and during the event is mainly adopted to avoid de-icing after the icing layer is closely adhered and frozen, so as to improve energy utilization efficiency; (2) energy use efficiency is improved, and less energy supply is used to increase an acting force of each vibration on the conductor as much as possible, that is, after potential energy is slowly accumulated, the potential energy is quickly released to increase energy released by the device at one time; (3) an acting frequency of the anti-icing and de-icing device is reasonably controlled according to different icing types, so as to save energy consumption; (4) a mass of the device itself is reduced, an energy density and a power density of the device are increased, an influence of the device on the existing tower line system is reduced as much as possible, and the existing tower line system is fully compatible, so that old problems are avoided, but there are also new problems; (5) the device is used in outdoor harsh environment for a long time, and is extremely difficult to install and remove, so that the requirement for average unfailing service time of the device is extremely strict, which requires using high-reliability components as much as possible, and reducing a number of the components as much as possible; and (6) the cost of the device is reduced, and the economy of the device is improved. To sum up, the mechanical anti-icing and de-icing device with the fixed installing position needs not only a stable and reliable energy supply source, but also the reasonable use of limited energy obtained, so as to improve the efficiency of energy accumulation and energy release of the whole anti-icing and de-icing device, and increase the energy density and the power density of the device. Some existing inventions and documents have made useful explorations in this aspect.

The present disclosure "DEVICE AND METHOD FOR REMOVING EXTRANEOUS MATTER LIKE ICE AND SNOW ON OVERHEAD LINE" (CN 1486525A) provides a mechanical anti-icing and de-icing device with a fixed installing position. According to the present disclosure, an operable and controllable electromagnetic vibrator is used and semi-fixedly installed on an overhead transmission line, and the icing on the conductor is shaken off by the vibration of the electromagnetic vibrator. The vibrator used is an existing product in the market, such as a Wacker 400w ER type of WACKER Company in the United States. Obviously, the present disclosure does not fully consider the practical difficulties faced by energy acquisition, but directly adopts the existing mature product, which directly leads to the fact that the present disclosure can hardly meet the actual needs, and tends to put forward an idea and concept. There are two main problems in using the existing mature product as the electromagnetic vibrator: (1) a vibration frequency of the existing electromagnetic vibrator is relatively high, and the excessively high vibration frequency not only causes excessive energy consumption, but also causes too fast attenuation of vibration conduction, so that a de-icing range is very limited, and a number of devices to be installed is increased sharply to achieve the same de-icing effect; and (2) the existing mature product does not consider an energy storage link, and the required energy consumption is far greater than the actual energy supply, so that the de-icing effect cannot be realized.

The present disclosures "MECHANICAL VIBRATION DE-ICING DEVICE" (CN 201417921Y), "DE-ICING DEVICE OF OVERHEAD CABLE THROUGH AIR BURST VIBRATION" (CN 201549858U), and "MECHANICAL VIBRATION DE-ICING DEVICE FOR OVERHEAD GROUND LINE" (CN 201247941Y) are all manually installed mechanical anti-icing and de-icing devices, and working principles of the devices are all to achieve the purpose of de-icing by driving the conductor to vibrate via the device. The remarkable characteristics of these present disclosures are a sufficient energy supply, a large vibration amplitude of the conductor and a good de-icing effect. However, these present disclosures also have some insurmountable shortcomings, for example: (1) chemical energy is used for energy supply (or energy storage), that is, an explosive is filled in advance, and the explosive explodes by remote control after the device is put in place, and obviously, this method can only be used for a single time or a few times generally, and in the case of exceeding corresponding times, the explosive needs to be filled again, which results in low efficiency; and (2) a traction rope of the device needs to be manually launched to hook the device on the conductor to be deiced during de-icing, which also results in low working efficiency.

The present disclosure "METHOD AND DEVICE FOR PREVENTING ICING AND SNOW HANGING UPON HIGH-VOLTAGE LINE" (CN 101286628A) provides a de-icing device for vibrating the conductor through vibration of the vibrator, and a de-icing principle of the present disclosure is also to shake off the icing on the conductor through vibration. Because the vibrator needs to transmit a vibration force to the overhead transmission line through an insulating connecting rod meeting an insulation distance, the principle of the present disclosure is simple, but is extremely difficult to realize, especially for an overhead transmission line of an ultra-high voltage, the insulating connecting rod may hardly be connected to the overhead transmission line as high as tens of meters above the ground. In actual operation, the device may be regarded as an upgraded version of manual de-icing.

The present disclosure "ELECTROMAGNETIC DE-ICING DEVICE FOR HIGH-VOLTAGE POWER LINE" (CN 201789255U) provides a method of shaking off the icing on the conductor by carrying out inductive energy acquisition at the equal potential on the overhead transmission line, and then driving an electromagnet to generate vibration through a coil by utilizing acquired energy. Obviously, the present disclosure does not consider the limited energy acquisition, nor does it consider the power required for generating the vibration for de-icing, which directly leads to the failure to realize the de-icing effect.

The present disclosure "POWER LINE DE-ICING DEVICE THROUGH GRAVITY IMPACT AND APPLICATION THEREOF" (CN102638021A) provides a de-icing device in which a circuit device is mainly used to realize the gravity impact on the line. In this present disclosure, an electromagnetic driver is used to pull upwardly or release downwardly a heavy object indirectly hung on the conductor, so as to generate an impact force on the overhead transmission line, thus shaking off the icing on the conductor. In this present disclosure, electric energy is acquired from the conductor through which a current flows by utilizing a principle of electromagnetic induction first, and then the acquired electric energy is stored through a capacitor. After the capacitor is charged, the electromagnetic driver is driven to lift the heavy object upwardly and release the heavy object downwardly by controlling a circuit switch to switch on and off, and gravitational potential energy of the heavy object is converted into the impact force on the conductor, thus achieving the purpose of de-icing the conductor. The advantages of the present disclosure are outstanding. (1) The capacitor is used to store energy, which is convenient for quick release of the stored energy when the energy supply is insufficient, so as to increase the power density of the device and the impact force on the line. (2) It is very convenient to realize control logic by utilizing active devices such as the circuit switch, thus being convenient for completing various operations such as lifting and releasing the heavy object. However, the shortcomings of this present disclosure are also obvious. (1) An energy density of the capacitor is relatively small, so that large volume and weight are needed, which will affect the energy density and economy of the whole device. (2) The capacitor and other circuit devices have relatively high requirements on a use environment, and an outdoor operation environment of the overhead transmission line is easy to cause premature aging and function loss of the capacitor. (3) There is no mature product available for the electromagnetic driver, so that it is difficult to realize the electromagnetic driver specifically, and even if the electromagnetic driver can be realized, a large driving current or a high driving voltage may be needed, which further leads to the requirement for further transformation of an output current or voltage of the capacitor, resulting in the increase of additional cost and poor device economy and reliability. (4) Once the current is increased, a cost on switching on and off the circuit switch is increased sharply, a weight of the device is increased significantly, and the economy and reliability become worse at the same time. (5) Too many control circuits and active devices will make the reliability of the device worse.

In order to solve the above technical problems or at least partially solve the above technical problems, the present disclosure provides an anti-icing and de-icing device based on sudden change of center of gravity by taking a mechanical clutch mechanism to switch energy storage and release states of an elastic element as an idea to improve a unit mass power density of the device.

The present disclosure provides an implementation mode mainly based on a mechanical mechanism, that is, an anti-icing and de-icing device based on sudden change of center of gravity of a heavy object, which forces a line to shake to shake off icing. By designing a reasonable mechanical structure, the solution combines the heavy object and an elastic element into one functional module, and simultaneously realizes two reciprocal energy working modes of energy storage and energy release. A simple and reliable clutch mechanism is adopted to switch the working modes of energy storage and energy release, and fewer kinds of relatively simple and reliable elements are adopted to realize the anti-icing and de-icing device which shakes off icing by sudden change of center of gravity, which not only improves energy density and power density of the device, but also improves running economy and reliability of the device.

According to the present disclosure, when the clutch mechanism is in an engaging state, an electric driving assembly drives a weight block to generate displacement relative to a base, and when the clutch mechanism is in a separation state, the electric driving assembly cuts off driving to the weight block. The weight block is provided with a potential energy module. When the clutch mechanism is separated, the potential energy module is used for accumulating potential energy when the weight block generates displacement relative to the base. When the clutch mechanism is separated, a driving force of the electric driving assembly on the weight block is cut off, the potential energy contained in the potential energy module is rapidly released, thus causing the whole gravity center of the device to suddenly change, and forming vibration to be transmitted to an overhead transmission line, so that the icing thereon is removed.

### (II) Technical solution

According to various embodiments of the present disclosure, an anti-icing and de-icing device, spacer and system based on sudden change of center of gravity, and an anti-galloping system are provided.

An anti-icing and de-icing device based on sudden change of center of gravity, used for being fixedly installed on an overhead transmission line or a railway contact system includes a base and an electric driving assembly, a weight block and a potential energy module arranged on the base;
the electric driving assembly includes a motor and a clutch mechanism, and the motor drives the weight block to generate displacement relative to the base through the clutch mechanism;
the clutch mechanism includes an input end, an output end, a driving part and a driven part; the input end is connected with the driving part, and the driven part is connected with the output end; and there is only two mutually exclusive and controllable working states including engaging and separation states between the driving part and the driven part;
when the driving part and the driven part are in the engaging state, the driving part transmits an acting force, torque or motion to the driven part; and when the driving part and the driven part are in the separation state, the driving part is cut off to transmit the acting force, torque or motion to the driven part;
the motor is in transmission connection with the input end, and the output end is connected with the weight block;
when the driving part and the driven part are in the engaging state, the electric driving assembly drives the weight block to generate displacement relative to the base; and when the driving part and the driven part are in the separation state, the electric driving assembly cuts off driving to the weight block;
the potential energy module is used for accumulating potential energy when the weight block generates the displacement relative to the base, and releasing the potential energy when the driving part and the driven part are in the separation state; and
the potential energy module includes an elastic element, one end of the elastic element is connected with the weight block, and the other end of the elastic element is connected with the base; and when the weight block generates the displacement relative to the base, the elastic element generates elastic deformation, and the potential energy accumulated by the potential energy module includes elastic potential energy generated by the elastic deformation of the elastic element.

As an alternative embodiment of the embodiments of the present disclosure, the base is provided with a cavity, and the weight block, the potential energy module and the clutch mechanism are arranged in the cavity.

As an alternative embodiment of the embodiments of the present disclosure, the cavity is a sealing structure.

As an alternative embodiment of the embodiments of the present disclosure, the cavity is a cylindrical structure.

As an alternative embodiment of the embodiments of the present disclosure, multiple elastic elements are provided.

As an alternative embodiment of the embodiments of the present disclosure, the elastic element is a spring.

As an alternative embodiment of the embodiments of the present disclosure, the spring is a pneumatic spring, a cylindrical spring, a leaf spring, a disc spring or a torque spring.

As an alternative embodiment of the embodiments of the present disclosure, the potential energy accumulated by the potential energy module further includes gravity potential energy of the weight block.

As an alternative embodiment of the embodiments of the present disclosure, a motor control module is further included, wherein the motor control module is electrically connected with the motor, and used for controlling actions of the motor, and the actions include forward rotation, reverse rotation, stopping and speed regulation.

As an alternative embodiment of the embodiments of the present disclosure, the driving part and the driven part is set with a separation state duration.

As an alternative embodiment of the embodiments of the present disclosure, an action frequency of the anti-icing and de-icing device based on sudden change of center of gravity is set based on the separation state duration of the driving part and the driven part.

As an alternative embodiment of the embodiments of the present disclosure, the separation state duration of the driving part and the driven part is set by controlling the rotation, stopping and a rotation speed of the motor.

As an alternative embodiment of the embodiments of the present disclosure, the clutch mechanism is a controlled clutch mechanism, and further includes a clutch control unit and a position switch, the clutch control unit is used for controlling engagement and separation of the driving part and the driven part, the position switch is arranged on the base and used for acquiring a position of at least one of the driving part, the driven part and the weight block, and the clutch control unit controls the driving part and the driven part to enter into the engaging state or separation state according to an output of the position switch.

As an alternative embodiment of the embodiments of the present disclosure, the clutch mechanism is an auto-controlled clutch mechanism;
the auto-controlled clutch mechanism automatically enters into the engaging state or separation state by utilizing change of a motion state of the driving part and/or change of the driven part and a structure change of the auto-controlled clutch mechanism; and
the driving part is provided with a first engaging portion and a separating portion, the driven part is provided with a second engaging portion, when the first engaging portion is cooperated with the second engaging portion, the driving part and the driven part enter into the engaging state, and when the separating portion is cooperated with the second engaging portion, the driving part and the driven part enter into the separation state.

As an alternative embodiment of the embodiments of the present disclosure, the driving part is an incomplete gear, and is provided with a tooth segment and a smooth segment arranged in a circumferential direction sequentially, the first engaging portion is the tooth segment, and the separating portion is the smooth segment; and the driven part is a rack, and the second engaging portion is a tooth segment on the rack.

As an alternative embodiment of the embodiments of the present disclosure, the driving part is an incomplete gear, and is provided with a tooth segment and a smooth segment arranged in a circumferential direction sequentially, the first engaging portion is the tooth segment, and the separating portion is the smooth segment; and
the driven part is a gear, and the second engaging portion is a tooth portion on the gear; or, the driven part is a gear set, and the second engaging portion is a tooth portion of an input gear of the gear set.

As an alternative embodiment of the embodiments of the present disclosure, the driving part and the driven part is set with a separation state duration, and the separation state duration of the driving part and the driven part is set based on a radian of the smooth segment of the incomplete gear.

As an alternative embodiment of the embodiments of the present disclosure, the driving part is a cam, a contact surface between the cam and the driven part includes an edge surface smooth portion and a cross-sectional step portion, the first engaging portion is the edge surface smooth portion, and the separating portion is the cross-sectional step portion; and the driven part is an ejector rod or a pull rod, the ejector rod or the pull rod is in sliding fit with the base, and the second engaging portion is an edge surface of the ejector rod or the pull rod contacted with the cam.

As an alternative embodiment of the embodiments of the present disclosure, the cam is a disk cam or a cylindrical cam.

As an alternative embodiment of the embodiments of the present disclosure, a winding assembly and a flexible joint device are further included; the motor is in transmission connection with the winding assembly through the clutch mechanism; when the driving part is engaged with the driven part, the motor drives the winding assembly to rotate; when the driving part is separated from the driven part, drive of the motor to the winding assembly is cut off; and one end of the flexible joint device is connected with the weight block, and the other end of the flexible joint device is wound on the winding assembly to drive the weight block to generate the displacement relative to the base through rotation of the winding assembly.

As an alternative embodiment of the embodiments of the present disclosure, the input end includes a second gear in transmission connection with an output shaft of the motor; the output end includes a winding drum; the driving part is a first end face cam arranged on a third gear; the driven part is a second end face cam arranged on the winding drum; a cylindrical spring is used for tightly connecting the first end face cam and the second end face cam in the engaging state; and a first travel switch and a second travel switch are used for acquiring a position of the first end face cam, and the position information is used for controlling the motor to realize engagement and separation of the first end face cam and the second end face cam;
the winding assembly includes a fixed shaft, the third gear and the winding drum; the fixed shaft is fixedly installed on the base, and an outer wall of a first end of the fixed shaft is provided with a threaded segment; the third gear is sleeved outside the fixed shaft and is in threaded fit with the threaded segment; the third gear is engaged with the second gear, and under the drive of the motor, the third gear removes axially along the threaded segment, and remains being engaged with the second gear during movement; the winding drum is rotatably sleeved outside the fixed shaft and is used for winding the flexible joint device 7; one side of the third gear 104 toward the winding drum 111 is provided with the first end face cam 103, and one side of the winding drum 111 toward the third gear 104 is provided with the second end face cam 107; one side of the third gear toward the winding drum is provided with the first end face cam, and one side of the winding drum toward the third gear is provided with the second end face cam; when the third gear rotates in a first direction, the first end face cam is in cam fit with the second end face cam, which enables the first end face cam and the second end face cam to slide and rotate relative to each other; and when the third gear rotates in a second direction, the first end face cam and the second end face cam are able to be clamped, which mean that the first end face cam drives the second end face cam to rotate together;
the fixed shaft is provided with the first travel switch and the second travel switch, the first travel switch is located on one side of the third gear back to the winding drum, the second travel switch is located between the third gear and the winding drum, a limiting step is arranged on the fixed shaft, and the limiting step is located between the second travel switch and the second end face cam and is used for limiting the second end face cam to slide in a direction of the motor; when the third gear moves to trigger the first travel switch, the first travel switch is triggered to send an instruction to the motor, the motor drives the third gear to rotate in the first direction, and the first end face cam pushes the second end face cam to move in a direction away from the second gear; and when the third gear moves to trigger the second travel switch, an instruction is sent to the motor, and the motor drives the third gear to rotate in the second direction, to enable end faces of the first end face cam and the second end face cam to be buckled with each other, and drives the winding drum to rotate in the second direction to wind the flexible joint device on the winding drum; and
the cylindrical spring is compressed and connected between one side of the winding drum away from the third gear and the base, and the cylindrical spring is sleeved outside the fixed shaft and is used for providing a pushing force for the winding drum close to the third gear when the first end face cam rotates in the second direction to achieve that the second end face cam and the first end face cam are attached and kept in a buckled state; wherein, a length of the cylindrical spring in a natural state satisfies that: when the third gear moves to trigger the first travel switch, the second end face cam and the first end face cam are separated or spaced apart from each other to ensure the winding drum to be free to rotate on the fixed shaft.

As an alternative embodiment of the embodiments of the present disclosure, the clutch mechanism is realized by utilizing a mechanism including an incomplete gear cooperated with a rack, and includes a first gear in transmission connection with the motor and a first rack cooperated with the first gear, the first gear is an incomplete gear, and a tooth segment and a smooth segment are sequentially arranged in a circumferential direction; the first gear is the driving part, and the first rack is the driven part; the tooth segment on the first gear is the first engaging portion, the smooth segment on the first gear is the separating portion, and a tooth portion on the first rack is the second engaging portion; and an input shaft of the first gear is the input end, and the first rack is the output end; and
one of the motor and the first rack is installed on the base, and the other is installed on the weight block, when the tooth segment on the first gear is cooperated with the first rack, the driving part is engaged with the driven part; and when the smooth segment on the first gear is cooperated with the first rack, the driving part is separated from the driven part.

As an alternative embodiment of the embodiments of the present disclosure, the clutch mechanism further includes a second gear set, the second gear set is arranged on the base, and the first gear is in transmission connection with the first rack through the second gear set; and the first gear is in transmission connection with an input gear of the second gear set, and an output gear of the second gear set is in transmission connection with the first rack.

As an alternative embodiment of the embodiments of the present disclosure, the clutch mechanism is realized by utilizing a mechanism including an incomplete gear cooperated with a complete gear, and includes a fourth gear and a winding assembly provided with a complete gear at one end, and the fourth gear is an incomplete gear and is provided with a tooth segment and a smooth segment;
an input shaft of the four gear is the input end, and a winding drum of the winding assembly is the output end; the fourth gear is the driving part, the tooth segment on the fourth gear is the first engaging portion, and the smooth segment on the fourth gear is the separating portion; and the winding assembly with the complete gear at one end is the driven part, and the second engaging portion is a tooth portion of the complete gear on the winding assembly; and
the input shaft of the fourth gear is in transmission connection with the output shaft of the motor, and the fourth gear is cooperated with the winding assembly with the complete gear at one end; when the tooth segment on the fourth gear is cooperated with the winding assembly, the driving part is engaged with the driven part; and when the smooth segment on the fourth gear is cooperated with the winding assembly, the driving part is separated from the driven part.

As an alternative embodiment of the embodiments of the present disclosure, the clutch mechanism further includes a first gear set, the first gear set is arranged on the base, and the fourth gear is in transmission connection with the winding assembly through the first gear set; and the fourth gear is in transmission connection with an input end the first gear set, and an output end of the first gear set is in transmission connection with the winding assembly.

As an alternative embodiment of the embodiments of the present disclosure, one end of the weight block is rotationally connected with the base to enable the weight block to swing relative to the base.

As an alternative embodiment of the embodiments of the present disclosure, the weight block is rotationally connected with the base through a rod of pendulum; and the elastic element is a torque spring arranged between the weight block and the base.

As an alternative embodiment of the embodiments of the present disclosure, the clutch mechanism is realized by utilizing a mechanism including an incomplete gear cooperated with a rack, and includes a fifth gear and a sixth gear, and the fifth gear is the incomplete gear and is provided with a tooth segment and a smooth segment;
the fifth gear is the driving part, the sixth gear is the driven part, the tooth segment on the fifth gear is the first engaging portion, and the smooth segment on the fifth gear is the separating portion; the second engaging portion is a tooth portion on the sixth gear; an input shaft of the fifth gear is the input end, and the rod of pendulum connected with the sixth gear is the output end; and
the fifth gear is in transmission connection with the output shaft of the motor, one end of the weight block rotationally connected with the base is provided with the sixth gear, when the tooth segment on the fifth gear is cooperated with the sixth gear, the driving part is engaged with the driven part, and when the smooth segment on the fifth gear is cooperated with the sixth gear, the driving part is separated from the driven part.

As an alternative embodiment of the embodiments of the present disclosure, the clutch mechanism is realized by utilizing a mechanism including a first cam cooperated with a first ejector rod or pull rod; the first cam is the driving part, the first ejector rod or pull rod is the driven part, a smooth contact surface on the first cam is the first engaging portion, a cross-sectional step on the first cam is the separating portion, and the second engaging portion is an edge surface of the first ejector rod or pull rod contacted with the cam; and a power input shaft of the first cam is the input end, and one end of the first ejector rod or pull rod connected with the weight block is the output end; and
the first cam is in transmission connection with the motor, the base is provided with a limiting groove, the weight block is in sliding fit with the limiting groove, the elastic element is a cylindrical spring arranged between the weight block and the base, the first cam is in cam fit with the weight block to enable the weight block to slide along the limiting groove, a cross-sectional step is arranged on a contact surface of the first cam, and when the first ejector rod or pull rod crosses the cross-sectional step, it achieves state transition from engagement to separation and then to engagement of the driving part and the driven part.

As an alternative embodiment of the embodiments of the present disclosure, the base is provided with a connecting portion, and the connecting portion is used for connecting the overhead transmission line or the railway contact system.

As an alternative embodiment of the embodiments of the present disclosure, one or multiple connecting portions are provided.

As an alternative embodiment of the embodiments of the present disclosure, the connecting portion is a wire clamp or a rotary wire clamp.

As an alternative embodiment of the embodiments of the present disclosure, an energy acquisition module is further included;

the energy acquisition module includes one or multiple inductive power acquisition units equipotentially installed on a conductor or a sub-conductor of the overhead transmission line, the inductive power acquisition unit is used for converting magnetic field energy around the sub-conductor into electric energy and providing the electric energy to the electric driving assembly; or
the energy acquisition module includes a photovoltaic battery panel and an energy storage capacitor or an energy storage battery connected with the photovoltaic battery panel.

As an alternative embodiment of the embodiments of the present disclosure, the multiple inductive power acquisition units are connected in series or in parallel.

As an alternative embodiment of the embodiments of the present disclosure, the inductive power acquisition unit is arranged a wire clamp or a rotary wire clamp of the connecting portion.

As an alternative embodiment of the embodiments of the present disclosure, a gear shifting mechanism is further included, wherein the gear shifting mechanism is in transmission connection between the motor and the clutch mechanism or in transmission connection between the clutch mechanism and the weight block.

As an alternative embodiment of the embodiments of the present disclosure, the gear shifting mechanism is provided with a backstop structure.

As an alternative embodiment of the embodiments of the present disclosure, the gear shifting mechanism is a mechanical gear shifting mechanism.

As an alternative embodiment of the embodiments of the present disclosure, the mechanical gear shifting mechanism is a gear transmission mechanism, a turbine worm gear shifting mechanism or a planetary gear shifting mechanism.

As an alternative embodiment of the embodiments of the present disclosure, a communication module is further included, used for receiving master station or manual commands, or communicating or relaying communication between different devices.

As an alternative embodiment of the embodiments of the present disclosure, a first acceleration sensor is further included, wherein the first acceleration sensor is used for detecting an acceleration of movement of the base and comparing the acceleration with a set acceleration threshold to form state information.

As an alternative embodiment of the embodiments of the present disclosure, the base is provided with a stop portion, the stop portion is arranged on a movement path of the weight block and used for stopping the movement of the weight block when the potential energy module releases the potential energy.

As an alternative embodiment of the embodiments of the present disclosure, the stop portion further includes an elastic pad, and the elastic pad is arranged on the stop portion or between different interlayers of the stop portion for buffering impact between the weight block and the stop portion, and avoiding rigid collision between the weight block and the stop portion.

An anti-icing and de-icing spacer used between bundle conductors, between phase conductors and phase conductors or between phase conductors and overhead ground wires of an overhead power transmission line, includes a spacer body and at least one anti-icing and de-icing device based on sudden change of center of gravity as mentioned above installed on the spacer body.

As an alternative embodiment of the embodiments of the present disclosure, multiple anti-icing and de-icing devices based on sudden change of center of gravity as mentioned above are installed on the spacer body, and motion directions of weight blocks of the multiple anti-icing and de-icing devices based on sudden change of center of gravity are parallel or crossed.

As an alternative embodiment of the embodiments of the present disclosure, the multiple anti-icing and de-icing devices based on sudden change of center of gravity as mentioned above are installed on the spacer body, a controller is further installed on the spacer body, and the controller is used for controlling motors of the multiple anti-icing and de-icing devices based on sudden change of center of gravity to act at a set time sequence and/or frequency.

An anti-icing and de-icing system for an overhead transmission line or a railway contact system, includes multiple anti-icing and de-icing devices based on sudden change of center of gravity mentioned above or multiple anti-icing and de-icing spacers as mentioned above, wherein the multiple anti-icing and de-icing devices based on sudden change of center of gravity or the multiple anti-icing and de-icing spacers are distributed and installed on an overhead transmission line or a railway contact system.

As an alternative embodiment of the embodiments of the present disclosure, a control system is further included, wherein the control system is used for controlling the multiple anti-icing and de-icing devices based on sudden change of center of gravity or the multiple anti-icing and de-icing spacers to act at a set sequence and/or frequency.

An anti-galloping system for an overhead transmission line, includes multiple second acceleration sensors distributed on the overhead transmission line and multiple anti-icing and de-icing devices based on sudden change of center of gravity as mentioned above, or multiple anti-icing and de-icing spacers as mentioned above, wherein the multiple second acceleration sensors are used for detecting directions and magnitudes of accelerations at various positions caused by galloping or vibration of the overhead transmission line, and each of the anti-icing and de-icing devices based on sudden change of center of gravity or the anti-icing and de-icing spacer acts based on the directions and the magnitudes of the accelerations.

Other features and advantages of the present disclosure will be elaborated in the following description, and will be partially obvious from the description, or may be learned by practice of the present disclosure. The objects and other advantages of the present disclosure are realized and obtained by the structures particularly pointed out in the specification, claims and drawings, and the details of one or more embodiments of the present disclosure are set forth in the following drawings and descriptions.

To make the above objects, features and advantages of the present disclosure more obvious and easier to understand, the optional embodiments will be described in detail below in conjunction with the accompanying drawings.

### BRIEF DESCRIPTION OF THE DRAWINGS

In order to illustrate the technical solutions in the embodiments of the present disclosure or the prior art more clearly, the drawings to be used in the description of the embodiments or the prior art will be briefly described below. Obviously, those of ordinary skills in the art can also obtain other drawings based on these drawings without going through any creative work.
FIG. 1 illustrates a slideway-free device with sudden change of center of gravity with a clutch mechanism including a gear cooperated with a rack;
FIG. 2 illustrates a device with sudden change of center of gravity with a clutch mechanism including a rotation transverse movement cooperated with a position switch;
FIG. 3 illustrates a clutch structure utilizing a rotation transverse movement cooperated with a position switch;
FIG. 4 illustrates a device with sudden change of center of gravity with a clutch mechanism including an incomplete gear cooperated with a complete gear;
FIG. 5 illustrates a clutch structure including an incomplete gear cooperated with a complete gear set;
FIG. 6 illustrates a device with sudden change of center of gravity with a clutch mechanism utilizing cam fit and connected with a weight block by a flexible joint device;
FIG. 7 illustrates a device with sudden change of center of gravity with a clutch mechanism utilizing cam fit and in rigid connection with a weight block;
FIG. 8 illustrates a device with sudden change of center of gravity utilizing a quaternary fission sub-conductor spacer as a base;
FIG. 9 illustrates a device with sudden change of center of gravity utilizing a binary fission sub-conductor spacer as a base;
FIG. 10 illustrates a device with sudden change of center of gravity provided with a slideway and a clutch mechanism including a gear cooperated with a rack;
FIG. 11 illustrates a device with sudden change of center of gravity assembled by utilizing single conductors connected by a wire clamp;
FIG. 12 illustrates a working principle diagram of one inductive power acquisition unit;
FIG. 13 illustrates a schematic circuit diagram of one inductive power acquisition unit;
FIG. 14 illustrates a conductor clamp with a built-in energy acquisition device;
FIG. 15 illustrates a device with sudden change of center of gravity assembled by utilizing single conductors connected by the wire clamp with the built-in energy acquisition device;
FIG. 16 illustrates a device with sudden change of center of gravity assembled by utilizing bundle conductors connected by a wire clamp;
FIG. 17 illustrates a single device with sudden change of center of gravity installed on a quaternary fission sub-conductor spacer;
FIG. 18 illustrates two devices with sudden change of center of gravity with the same direction of sudden change of center of gravity installed on a quaternary fission sub-conductor spacer;
FIG. 19 illustrates two devices with sudden change of center of gravity with a 180-degree difference in directions of sudden change of center of gravity installed on a quaternary fission sub-conductor spacer;
FIG. 20 illustrates two devices with sudden change of center of gravity with a 90-degree difference in directions of sudden change of center of gravity installed on a quaternary fission sub-conductor spacer;
FIG. 21 illustrates a device with sudden change of center of gravity adopting an interphase spacer body as a base;
FIG. 22 illustrates a device with sudden change of center of gravity adopting a phase-to-ground spacer body as a base;
FIG. 23 illustrates a working flowchart of an anti-icing and de-icing device based on sudden change of center of gravity; and
FIG. 24 illustrates a device with sudden change of center of gravity based on a cylindrical cam.

Wherein:
1: base; 2: to electric driving assembly; 21: first gear; 22: rack; 3: weight block; 4: connecting rod; 5: sliding rail; 6: elastic element; 7: flexible joint device; 8: winding assembly; 9: rod of pendulum; 10: stop portion; 11: connecting portion; 13: wire clamp; 100: anti-icing and de-icing device based on sudden change of center of gravity; 101: motor; 102: second gear; 103: first end face cam; 104: third gear; 105: threaded segment; 106: first travel switch; 107: second end face cam; 108: second travel switch; 109: fixed shaft; 110: cylindrical spring; 111: winding drum; 112: limiting step; 122: cylindrical cam; 123: speed reduction worm; 124: speed reduction turbine; 14: inductive power acquisition unit; 15: fifth gear; 16: sixth gear; 200: insulator; 301: fourth gear; 302: first gear set; 401: cam; 402: limiting groove; 403: connecting rod; 501: conductor; 502: iron core; 503: secondary coil.

### DETAILED DESCRIPTION

In order to better understand the above objects, features and advantages of the present disclosure, the solutions of the present disclosure will be further described below. It should be noted that, in case of no conflict, the embodiments in the present disclosure and the features in the embodiments may be combined with each other.

In the following description, many specific details are set forth in order to fully understand the present disclosure, but the present disclosure may be practiced in other ways than those described herein. Obviously, the embodiments described in the specification are merely a part of, rather than all of, the embodiments of the present disclosure.

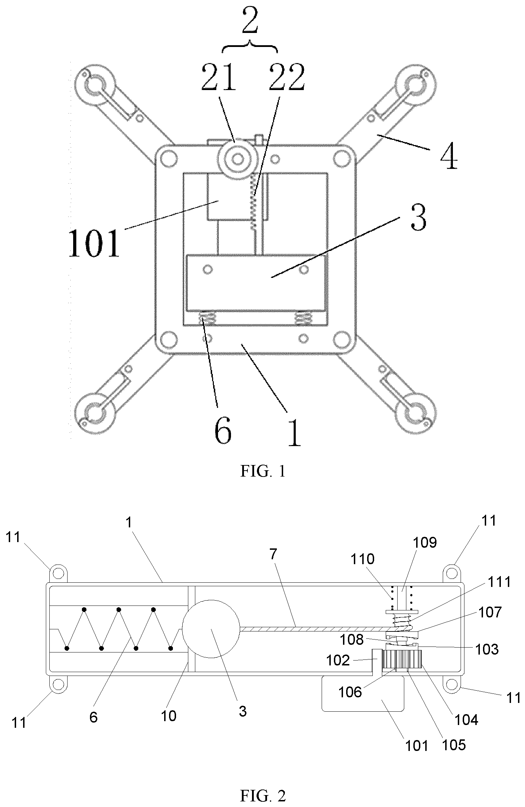

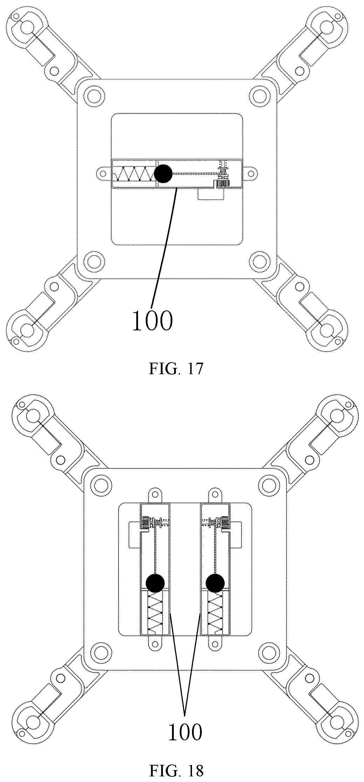

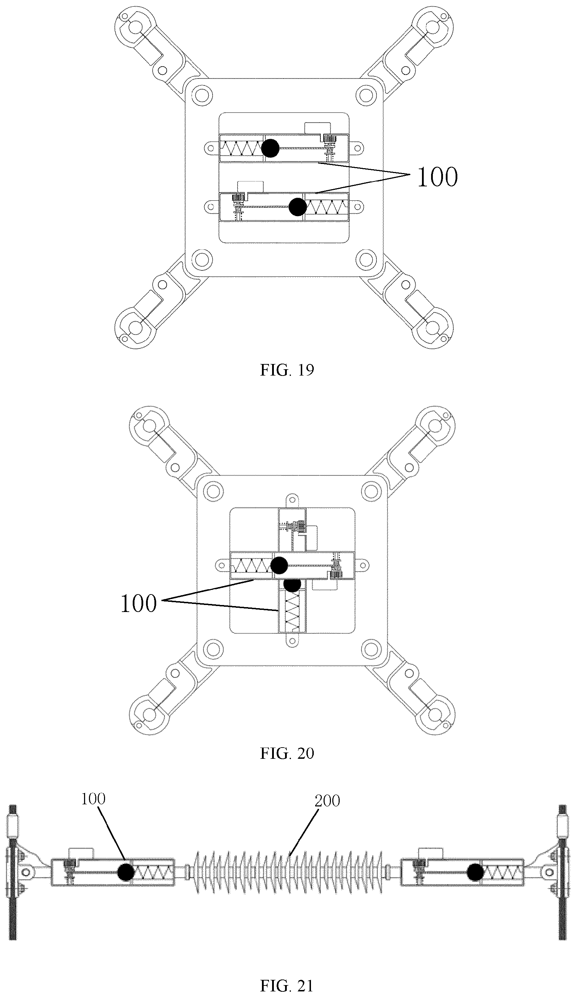

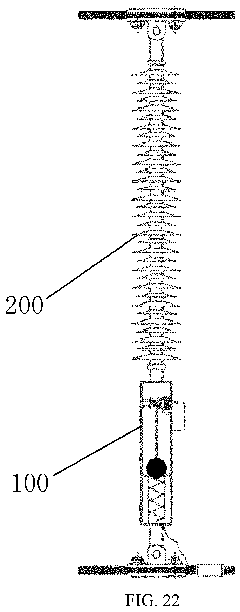

As shown in FIGs. 1, 2, 4, 6, 7, 8, 9, 10, 11, 15, 16, 17, 18, 19, 20, 21, 22 and 24, the embodiments of the present disclosure provide an anti-icing and de-icing device based on sudden change of center of gravity 100, which is used for being fixedly installed on an overhead transmission line or a railway contact system. For example, the device is connected to a conductor clamp 13, and is suitable for being installed on a single conductor or a bundle conductor for anti-icing and de-icing (FIGs. 1, 8, 9, 10, 11, 15, 16, and 24). The device is arranged on a sub-conductor spacer and is suitable for anti-icing and de-icing (FIGs. 17, 18, 19, and 20) of the bundle conductor, and a vibration effect generated by sudden change of center of gravity is transmitted to a conductor through the sub-conductor spacer to realize anti-icing and de-icing. The device is arranged on an interphase spacer or a phase-to-ground spacer (the phase-to-ground spacer is installed between a phase conductor and an overhead ground wire), and is suitable for mutual anti-icing and de-icing between the phase conductor and the phase conductor as well as between the phase conductor and the overhead ground wire (FIGs. 21 and 22), and the interphase spacer and the phase-to-ground spacer are used to transmit the vibration effect generated by sudden change of center of gravity to conductors on different phases or on the overhead ground wire to realize anti-icing and de-icing. The device is arranged on the railway contact system and is suitable for anti-icing and de-icing of the railway contact system.

As shown in FIGs. 1, 2, 4, 6, 7, 8, 9, 10, 11, 15, 16, 17, 18, 19, 20, 21, 22 and 24, the device specifically includes a base 1 and an electric driving assembly 2, a weight block 3 and a potential energy module arranged on the base 1. The weight block 3 includes an object with a certain mass, preferably an object with high-density solid material and a certain hardness or elasticity or toughness, which is beneficial to improving a vibration effect generated by the device. A mass of the weight and parameters of a spring are comprehensively selected according to a vibration effect needing to be generated by the device. The base 1 serves as a basis of the device, and is used for connecting with the overhead transmission line and the railway contact system, or combining and connecting with a sub-conductor spacer, an interphase spacer and a phase-to-ground spacer on one hand, but is also used for installing the electric driving assembly 2, the weight block 3 and the potential energy module. The electric driving assembly 2 includes a motor 101 and a clutch mechanism, and the motor 101 drives the weight block 3 to generate displacement relative to the base through the clutch mechanism. The clutch mechanism includes an input end, an output end, a driving part, and a driven part. The input end is connected with the driving part, and the driven part is connected with the output end. There is only two mutually exclusive and controllable working states including engaging and separation states between the driving part and the driven part. When the driving part and the driven part are in the engaging state, the driving part transmits an acting force, torque or motion to the driven part. When the driving part and the driven part are in the separation state, the driving part is cut off to transmit the acting force, torque or motion to the driven part. The motor 101 is in transmission connection with the input end, and the output end is connected with the weight block 3. When the driving part and the driven part are in the engaging state, the electric driving assembly 2 drives the weight block 3 to generate displacement relative to the base 1, wherein the displacement may be formed by linear motion, curve motion or swing in any direction. When the driving part and the driven part are in the separation state, the electric driving assembly 2 cuts off driving to the weight block 3. The potential energy module is used for accumulating potential energy when the weight block 3 generates the displacement relative to the base 1, and releasing the potential energy when the driving part and the driven part are in the separation state. The potential energy module includes an elastic element 6, one end of the elastic element 6 is connected with the weight block 3, and the other end of the elastic element is connected with the base 1. When the weight block 3 generates the displacement relative to the base 1, the elastic element 6 generates elastic deformation, and the potential energy accumulated by the potential energy module includes elastic potential energy generated by the elastic deformation of the elastic element 6.

When the driving part is engaged with the driven part, the weight block 3 deforms the elastic element 6 under the driving force of the electric driving assembly 2, and meanwhile, the weight block 3 is driven to generate displacement. The potential energy accumulated by the potential energy module includes potential energy together formed by the deformation of the elastic element 6 and the displacement generated by the weight block 3. When the driving part is separated from the driven part, the electric driving assembly 2 cuts off driving to the elastic element 6 and the weight block 3. Because the weight block 3 loses an acting force in a driving direction, the potential energy accumulated by the potential energy module can be released quickly, and the weight block 3 moves rapidly in a direction opposite to the displacement direction above under a restoring force of the elastic element 6. The restoring force of the elastic element 6 is an acting force always acting on the weight block 3; therefore, different from a movement mode of the electric driving assembly 2, the weight block 3 will accelerate, so that the whole gravity center of the device will suddenly change, which then acts on the overhead transmission line or the railway system to make the overhead transmission line or the railway system vibrate to realize an anti-icing or de-icing effect.

In a further embodiment, the base 1 adopts a cavity structure, such as a cylinder, and the gear shifting mechanism, the clutch mechanism, the potential energy module and the weight block 3 are arranged in the cavity. The cavity is preferably made of a low-density and high-strength material, which is beneficial to improve energy density per unit mass of the device. Furthermore, if the cavity is made of a sealing structure and a ferromagnetic material, the cavity cannot only reduce influence of an outdoor environment and electromagnetic interference on the device, but also can improve a protection level and running reliability of the device, and reduce uncontrollable factors such as long-term outdoor running to interfere with stable and reliable running of the device. Multiple elastic elements 6 are provided, and elastic devices such as springs, rubber and compressed gas springs may be selected. The spring is selected from one or more of a pneumatic spring, a cylindrical spring, a leaf spring, a disc spring or a torque spring. The potential energy accumulated by the potential energy module further includes gravity potential energy of the weight block 3. For example, if the displacement of the weight block 3 has a component motion in a height direction, that is, the weight block 3 moves upwards (downwards) or obliquely upwards (downwards), the potential energy further includes gravitational potential energy that the weight block 3 increases or decreases due to height change.

In some embodiments, the device further includes a motor control module, wherein the motor control module is electrically connected with the motor 101, and used for controlling actions of the motor 101. The actions include: forward rotation, reverse rotation, stopping and speed regulation. In a further embodiment, the base 1 is provided with a stop portion 10, the stop portion 10 is arranged on a movement path of the weight block 3 and used for stopping the movement of the weight block 3. The weight block 3 accelerates to a higher movement speed under the action of gravity and/or the restoring force of the elastic element 6. When the weight block 3 hits the stop portion 10, strong vibration may be generated, thus forming a better anti-icing or de-icing effect. The stop portion 10 further includes an elastic pad, and the elastic pad is arranged on the stop portion 10 or between different interlayers of the stop portion 10 for buffering impact between the weight block 3 and the stop portion 10, and avoiding rigid collision between the weight block 3 and the stop portion 10. By reasonably designing a mechanical structure, the weight block 3 and the elastic element 6 are combined together to simultaneously bear two working modes of energy storage and energy release which are mutually reverse in energy flows, two working modes of energy storage and energy release are switched by utilizing a simple and reliable mechanical clutch mechanism, fewer types of simple and reliable passive devices are adopted, energy density and power density of the device are improved, and running economy, reliability and compatibility of the device are improved.

The electric driving assembly 2 includes the motor 101 and the clutch mechanism, wherein the clutch mechanism is a key member of the present disclosure. The clutch mechanism in the present disclosure is a transmission mechanism of an acting force, torque or motion with a controllable state. The clutch mechanism includes an input end, an output end, a driving part, and a driven part. The input end is connected with the driving part, and the driven part is connected with the output end. There is only two mutually exclusive and controllable working states including engaging and separation states between the driving part and the driven part. When the driving part and the driven part are in the engaging state, the driving part is in mechanical transmission connection with the driven part, and used for transmitting an acting force, torque or motion to the driven part. When the driving part and the driven part are in the separation state, the mechanical transmission connection between the driving part and the driven part is cut off, and the driving part is cut off to transmit the acting force, torque or motion to the driven part. It should be noted that: (1) because one clutch mechanism may include multiple driving parts and driven parts, and the driving parts and the driven parts may be in one-to-more correspondence or in more-to-one correspondence, the above-mentioned engaging state or separation state refers to a certain pair of driving part and driven part. However, when one clutch mechanism only has one pair of driving part and driven part, the engaging state or separation state of the driving part and the driven part is just a state of the clutch mechanism. Without causing confusion, the state of the clutch mechanism is equivalent to a state between a certain pair of driving part and driven part. (2) The "controllable" is relative to "random" or "occurring with a certain probability", that is, when certain conditions are satisfied, the state between the driving part and the driven part is also determined. (3) Under a normal working condition, when the driving part is engaged with the driven part, a transmission direction of the acting force, torque or motion is unidirectional, but when a resistance of the driven part is greater than a driving force of the driving part, the transmission direction will be reversed, which may damage the device. Therefore, it is necessary to leave enough margin in a design stage to ensure unidirectional transmission of the acting force of the driving part to the driven part in various situations.

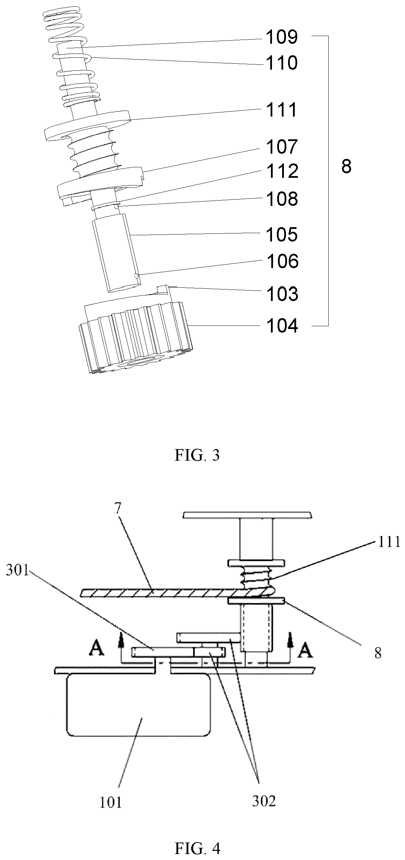

According to different control methods, the clutch mechanism may include a controlled clutch mechanism and an auto-controlled clutch mechanism. The controlled clutch mechanism enables the clutch mechanism to enter into the engaging state or separation state by controlling an engaging element, wherein the engaging and disengaging states may generally be switched at any time as required. According to different controlled clutch mechanisms, the clutch may include a mechanical clutch, a magnetic clutch, a hydraulic clutch and a pneumatic clutch. According to different states of the clutch mechanism after a control force is removed, the clutch may include a normally disengaged clutch and a normally engaged clutch. According to whether there is damping in a process of transmitting the acting force or movement between the driving part and the driven part, the clutch may include a clutch with damping effect and a clutch without damping effect, that is, an elastic clutch and a positive clutch. In the controlled clutch mechanism, the clutch control unit is a control module for controlling engagement or disengagement of the clutch mechanism, and an engagement or separation action of the driving part and the driven part is completed by the clutch control unit and related control mechanisms thereof. Controlled clutch mechanisms with different types of control mechanisms correspond to different clutch control units. For example, a clutch control unit of a magnetic clutch is a general term including an electromagnetic coil and a control circuit thereof for controlling the engagement and electromagnetic coil of the clutch. A clutch control unit corresponding to the clutch control unit is a clutch mechanical unit, that is, mechanical parts that transmit the acting force, torque or motion in the clutch mechanism, including the driving part, the driven part, the input end, the output end, and the like. Obviously, the controlled clutch mechanism has high operating flexibility and wide application range, but meanwhile, has high control cost. Generally, the engaging and separation states of the controlled clutch mechanism are realized by active control, and are almost impossible to realize through passive control. In the field of automobile engineering, the active control solution is employed in common magnetic clutch, friction clutch and hydraulic clutch. This clutch mechanism mainly drives or cuts off the torque or motion transmitted by the driving part to the driven part on a coaxial line by controlling the engaging state or separation state. In the field of electrical engineering, similar common mechanisms that use active control to realize a clutch function include: a solenoid valve and a hydraulic pump in a hydraulic operating mechanism of a circuit breaker for controlling energy storage and energy release of high and low pressure oil flows, and an electromagnetic mechanism in a spring operating mechanism of the circuit breaker for controlling a latch to trip to realize energy storage and energy release. The driving part is in fluid transmission connection with the driven part in the former, and the driving part is in mechanical transmission connection with the driven part in the latter. In the present disclosure, by introducing the clutch mechanism, the transmission of the acting force from the driving part to the driven part is driven or cut off by utilizing the engaging or separation state of the clutch mechanism, so that the weight block 3 moves relative to the base 1 and generates displacement. The clutch mechanism shown in FIGs. 2 and 3 is a mechanism that realizes the clutch function by utilizing active control (position switch cooperated with clutch control unit). Compared with the controlled clutch mechanism, the auto-controlled clutch mechanism is a clutch mechanism with an engaging element having a function of self-engagement or self-separation when some performance parameters, state structure and movement state of the driving part or the driven part change. Common self-control clutches include an overrun clutch, a centrifugal clutch, a safety clutch, and the like. These clutches realize the function of self-engagement or self-separation by utilizing a speed change or rotation direction change of the driving part or the driven part, or using a centrifugal force of a centrifugal body, or limiting a transmitted torque or rotation speed to not exceed a limited value. Apparent, state control of the self-control clutches is determined by running state or structural parameters thereof, and relative control devices are relatively simple.

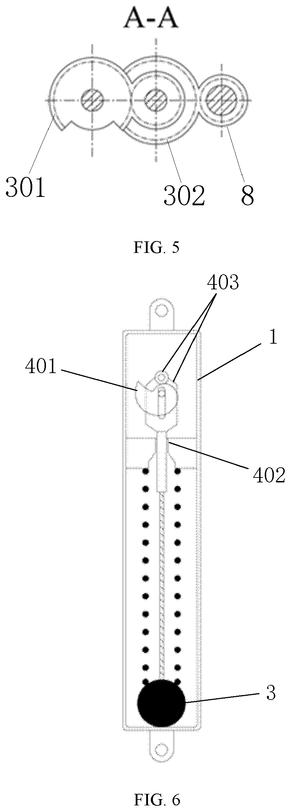

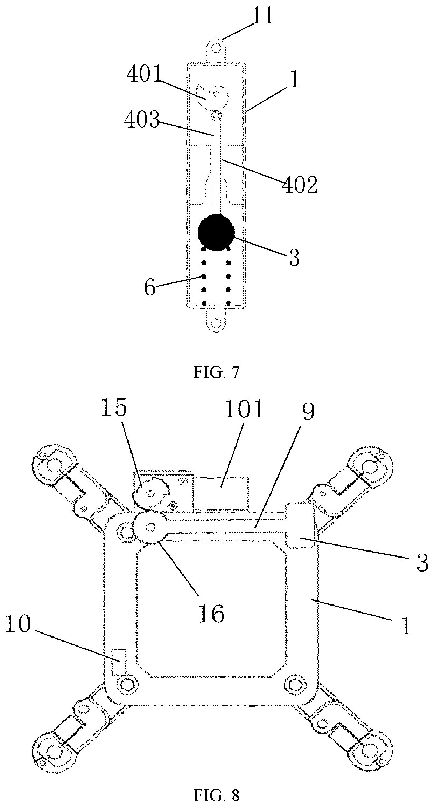

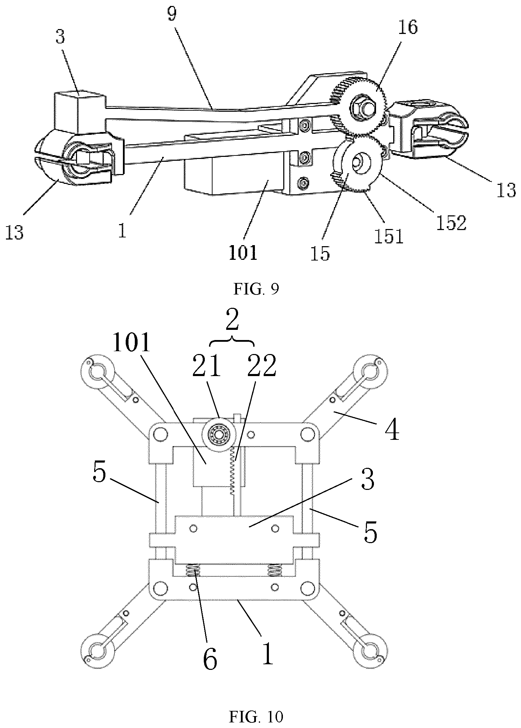

Under the condition of meeting actual working requirements of the anti-icing and de-icing device of the present disclosure, the functions of the clutch mechanism may be further simplified to improve the economy and reliability. (1) A control solution of the clutch mechanism is simplified. In some embodiments, a controlled clutch mechanism is adopted as the clutch mechanism. This clutch mechanism further includes a clutch control unit and a position switch. The clutch control unit is used for controlling engagement and separation of the driving part and the driven part, the position switch is arranged on the base 1 and used for acquiring a position of at least one of the driving part, the driven part and the weight block 3, and the clutch control unit controls the driving part and the driven part to enter into the engaging state or separation state according to an output of the position switch. In some embodiments, an auto-controlled clutch mechanism is adopted as the clutch mechanism. This clutch mechanism automatically enters into the engaging state or separation state by utilizing change of a motion state of the driving part and/or change of the driven part and a structure change of the clutch mechanism. The driving part is provided with a first engaging portion and a separating portion, and the driven part is provided with a second engaging portion. When the first engaging portion is cooperated with the second engaging portion, the driving part and the driven part enter into the engaging state. When the separating portion is cooperated with the second engaging portion, the driving part and the driven part enter into the separation state. In some auto-controlled clutch mechanisms, the driving part is an incomplete gear, and is provided with a tooth segment and a smooth segment are arranged in a circumferential direction sequentially, the first engaging portion is the tooth segment, and the separating portion is the smooth segment. The driven part is a rack, and the second engaging portion is a tooth segment on the rack. In some auto-controlled clutch mechanisms, the driving part is an incomplete gear, and is provided with a tooth segment and a smooth segment arranged in a circumferential direction sequentially, the first engaging portion is the tooth segment, and the separating portion is the smooth segment. The driven part is a gear, and the second engaging portion is a tooth portion on the gear. Or, the driven part is a gear set, and the second engaging portion is a tooth portion of an input gear of the gear set. In some auto-controlled clutch mechanisms, the driving part is a cam, a contact surface between the cam and the driven part includes an edge surface smooth portion and a cross-sectional step portion, the first engaging portion is the edge surface smooth portion, and the separating portion is the cross-sectional step portion. The driven part is an ejector rod or a pull rod, the ejector rod or the pull rod is in sliding fit with the base, and the second engaging portion is an edge surface of the ejector rod or the pull rod contacted with the cam. The cam may be a disk cam or a cylindrical cam. (2) The general clutch mechanism may have relative movement in the transmission process, and the relative motion may also have cumulative effect. Therefore, when the driving part and the driven part enter into the engaging state, an engagement buffering process is needed, and rigid connection cannot be adopted between the driving part and the driven part usually. If the clutch mechanism enters into the engaging state from the separation state, a speed difference between the driving part and the driven part is small, and the relative movement between the driving part and the driven part is very small in the engaging state. In this case, the corresponding driving part and the driven part may also be rigidly connected. Under the condition of using the rigid connection, the rigid connection has high energy transmission efficiency, good economy, few elements and high reliability. (3) For the switching control of the engaging and separation states, a periodic switching strategy is adopted, and the device performs energy storage and release repeatedly. This state switching strategy also meets working requirements of the device for anti-icing and de-icing, but the whole clutch mechanism and the control of the whole clutch mechanism are more simplified. Moreover, setting or adjustment of an action period of the device can also be realized by changing the state and structural parameters of the auto-controlled clutch mechanism. In this way, the auto-controlled clutch mechanism with simplified functions can be realized by utilizing a passive device, and the corresponding mechanism can be realized by utilizing an intermittent motion mechanism, for example, realized by a mechanism including an incomplete gear cooperated with a rack (FIGs. 1 and 10), a mechanism including an incomplete gear cooperated with a complete gear (set) (FIGs. 4, 5, 8 and 9) or a mechanism including a cam cooperated with an ejector rod or a pull rod (FIGs. 6 and 7). The clutch mechanism of the present disclosure preferably adopt the self-control clutch solution realized by utilizing the passive device, thereby reducing a number of equipment elements use for realizing the clutch mechanism, reducing complexity of control and improving running reliability and economy of the system.

In some clutch mechanisms, the driving part and the driven part is set with a separation state duration. An action frequency of the anti-icing and de-icing device based on sudden change of center of gravity may be set based on the separation state duration of the driving part and the driven part. The separation state duration of the driving part and the driven part is set by controlling the rotation, stopping and a rotation speed of the motor 101, or set based on a radian of the smooth segment of the incomplete gear. Obviously, the separation state duration may be set, which means that the separation state is a stable state that can be maintained, changed and extended, rather than a transitional, instantaneous and unsustainable state. By setting the separation state duration of the clutch mechanism, it not only can effectively improve the reliability of the clutch mechanism, but also can conveniently adjust the action frequency of the anti-icing and de-icing device, increase the application types for anti-icing and de-icing, or coordinate actions between different devices according to a set time sequence to improve the anti-icing and de-icing effect. In fact, the action frequency of the device may also be adjusted by setting an engaging state duration, but the following three ways to realize this idea have different degrees of difficulty. (1) If there is no backstop mechanism between the motor 101 and the driving part, in this case, the two are kept in a static state under the engaging state, which may cause the motor 101 to be damaged due to stalling of the motor 101, and the reliability of the device is reduced. (2) If there is a backstop mechanism between the motor 101 and the driving part, although a possibility of damaging the motor 101 due to the stalling of the motor 101 and the like cannot be caused, larger starting torque and larger starting current are needed when the motor 101 is restarted, which will also easily damage the motor 101 and reduce the reliability of the device. (3) The engaging state duration is changed by reducing the rotation speed of the motor 101 under the engaging state, which also needs to consider relatively complicated motor control caused by torque matching.

As shown in FIG. 2 and FIG. 4, some clutch mechanisms further include a winding assembly 8 and a flexible joint device 7. The motor 101 is in transmission connection with the winding assembly 8 through the clutch mechanism. When the driving part is engaged with the driven part, the motor 101 may drive the winding assembly 8 to rotate. When the driving part is separated from the driven part, drive of the motor 101 to the winding assembly 8 is cut off. One end of the flexible joint device 7 is connected with the weight block 3, and the other end of the flexible joint device is wound on the winding assembly 8 to drive the weight block 3 to generate the displacement relative to the base 1 through rotation of the winding assembly 8.

At the initial moment when the clutch mechanism starts to enter into the engaging state, switches to the separation state, and switches back to the engaging state, the anti-icing and de-icing device of the present disclosure completes one process from slow energy accumulation to rapid energy release. Accordingly, the weight block 3 completes one process of slowly moving from an initial position to a termination position and quickly returning to the initial position relative to the base 1. Some clutch mechanisms is also set with a separation state duration, and an action frequency of the anti-icing and de-icing device may be set by utilizing the separation state duration of the clutch mechanism. A vibration effect with certain frequency is generated on the overhead line or the railway contact system by repeating the above processes, thereby effectively inhibiting or interfering an icing generation process and achieving an anti-icing and de-icing object. Obviously, as long as the weight block 3 moves in a non-uniform straight line relative to the base 1, an effect of changing the gravity center can be generated, and an acceleration can be generated on the conductor through the corresponding connecting portion 11, so as to achieve an anti-icing and de-icing effect. Correspondingly, there are many mechanisms that can drive the weight block 3 to move in a non-uniform straight line relative to the base 1. Common mechanical mechanisms include a crank-link mechanism, a crank-slider mechanism, a cam mechanism, and the like. In the present disclosure, the engaging and separation states of the clutch mechanism are cooperated with energy storage and release energy states of the elastic element 6, so that an effect of sudden change of center of gravity of the device and the energy density and power density of the device are obviously improved, and the anti-icing and de-icing effect is greatly improved. In the present disclosure, various realized examples as follows are provided for the clutch mechanism.
(1) The clutch mechanism is realized by operating the controlled clutch mechanism (FIGs. 2 and 3). The input end of the clutch mechanism includes a second gear 102 in transmission connection with an output shaft of the motor 101 and a third gear 104, and the output end includes a winding drum 111. The driving part is a first end face cam 103 arranged on the third gear 104, and the driven part is a second end face cam 107 arranged on the winding drum 111. The clutch control unit includes a motor control module and a cylindrical spring 110. The cylindrical spring 110 is used for tightly connecting the first end face cam 103 and the second end face cam 107 in the engaging state. The position switch includes a first travel switch 106 and a second travel switch 108. The first travel switch 106 and the second travel switch 108 are used for acquiring a position of the first end face cam 103, and the position information is sent to the motor control module for controlling the motor to act so as to realize engagement and separation of the first end face cam 103 and the second end face cam 107. The separation state duration of the clutch mechanism may be set by utilizing the motor control module of the motor 101 or by utilizing a preset position of the position switch 106.

Specifically, an output shaft of the motor 101 is provided with a second gear 102. The winding assembly 8 includes a fixed shaft 109, the third gear 104, the winding drum 111 and the cylindrical spring 110. The fixed shaft 109 is fixedly installed on the base, and an outer wall of a first end of the fixed shaft 109 is provided with a threaded segment 105. The third gear 104 is sleeved outside the fixed shaft 109 and is in threaded fit with the threaded segment 105. The third gear 104 is engaged with the second gear, and under the drive of the motor 101, the third gear 104 removes axially along the threaded segment 105, and remains being engaged with the second gear 102. The winding drum 111 is rotatably sleeved outside the fixed shaft 109 and is used for winding the flexible joint device 7. One side of the third gear 104 toward the winding drum 111 is provided with the first end face cam 103, and one side of the winding drum 111 toward the third gear 104 is provided with the second end face cam 107. When the third gear 104 rotates in a first direction, the first end face cam 103 is in cam fit with the second end face cam 107, which enables the first end face cam 103 and the second end face cam 107 to slide and rotate relative to each other. When the third gear 104 rotates in a second direction, the first end face cam 103 and the second end face cam 107 are able to be clamped, which enable the first end face cam 103 to drive the second end face cam 107 to rotate together.

The fixed shaft 109 is provided with the first travel switch 106 and the second travel switch 108. The first travel switch 106 is located on one side of the third gear 104 back to the winding drum 111, and the second travel switch 108 is located between the third gear 104 and the winding drum 111. A limiting step 112 is arranged on the fixed shaft 109, and the limiting step 112 is located between the second travel switch 108 and the second end face cam 107 and is used for limiting the second end face cam to slide in a direction of the motor 101. When the third gear 104 moves to trigger the first travel switch 106, the first travel switch 106 is triggered to send an instruction to the motor 101. The motor 101 drives the third gear 104 to rotate in the first direction, and the first end face cam 103 pushes the second end face cam 107 to move in a direction away from the second gear 102. When the third gear 104 moves to trigger the second travel switch 108, an instruction is sent to the motor 101. The motor 101 drives the third gear 104 to rotate in the second direction. In this case, end faces of the first end face cam 103 and the second end face cam 107 are buckled with each other to drive the winding drum 111 to rotate in the second direction to wind the flexible joint device 7 on the winding drum 111. Thus, the flexible joint device 7 is wound on the winding drum 111, and the flexible joint device 7 pulls the weight block 3 to move along the base 1. Meanwhile, the elastic element 6 forms accumulation of elastic potential energy.

The cylindrical spring 110 is compressed and connected between one side of the winding drum 111 away from the third gear 104 and the base 1, and the cylindrical spring 110 is sleeved outside the fixed shaft 109 and is used for providing a pushing force for the winding drum 111 close to the third gear 104 when the first end face cam 103 rotates in the second direction to achieve that the second end face cam 107 and the first end face cam 103 are attached and kept in a buckled state. A length of the cylindrical spring 110 in a natural state satisfies that: when the third gear 104 moves to trigger the first travel switch 106, the second end face cam 107 and the first end face cam 103 are separated or spaced apart from each other to enable the winding drum 111 to be free to rotate on the fixed shaft 109. In this way, the flexible joint device 7 can be paid off from the winding drum 111, the elastic element 6 can pull the weight block 3 in a direction away from the winding assembly 8, and the weight block 3 accelerates, so that the gravity center of the whole device suddenly changes.

The elastic element 6 may be set at one side of the weight block 3 away from the winding assembly 8 by tensile deformation or one the side of the weight block 3 close to the winding assembly 8 by compressive deformation. By utilizing the flexible joint device, a movement distance of the weight block 3 is increased, and a volume of the device is relatively reduced, power density per unit volume of the device is improved, which is convenient for installing the device in an existing tower line system, and improves compatibility between the de-icing and anti-icing device of the present disclosure and the existing tower line system.

(2) The clutch mechanism is an auto-controlled clutch mechanism (FIGs. 1 and 10). The auto-controlled clutch mechanism is realized by utilizing an intermittent motion mechanism. The intermittent motion mechanism is a mechanism including an incomplete gear cooperated with a rack, including a first gear 21 in transmission connection with the motor 101 and a first rack 22 cooperated with the first gear. An input shaft of the first gear 21 is an input end of the clutch mechanism, the first rack 22 is an output end of the clutch mechanism, and the first rack 22 is connected with the weight block 3. The first gear 21 is an incomplete gear, and is provided with a tooth segment and a smooth segment arranged in a circumferential direction sequentially. The first gear 21 is the driving part, and the first rack 22 is the driven part. The tooth segment on the first gear 21 is the first engaging portion, the smooth segment on the first gear 21 is the separating portion, and a tooth portion on the first rack 22 is the second engaging portion. The separation state duration is set by an angle of the smooth segment on the first gear 21 or by the motor control module of the motor 101.

When the tooth segment on the first gear 21 is cooperated with the first rack 22, the clutch mechanism is engaged, and the first rack 22 and the weight block 3 are driven to move against a spring force by the rotation of the motor 101. When the smooth segment on the first gear 21 is cooperated with the first rack 22, the clutch mechanism is separated, the motor 101 and the first gear 21 cut off driving and constraint on the first rack 22, and the weight block 3 accelerates under the action of the elastic element 6, so that the gravity center of the device suddenly changes to realize de-icing and anti-icing. The elastic force of the spring should be greater than a mass of the weight block 3; otherwise an installing direction of the device and the effect of sudden change of center of gravity will be greatly limited. When the weight block 3 moves to a tail end of the base 1, the weight block 3 collides with the base 1, resulting in violent vibration and strong de-icing effect. In other embodiments, the motor 101 may be installed on the weight block 3, and the first rack 22 can be installed on the base 1, as long as the weight block 3 can move relative to the base 1 through the cooperation of the first gear 21 and the first rack 22, and the clutch mechanism can be used to switch between the two working modes of energy storage and energy release.

The clutch mechanism further includes a second gear set, the second gear set is arranged on the base 1, and the first gear 21 is in transmission connection with the first rack 22 through the second gear set. The first gear 21 is in transmission connection with an input end of the second gear set, and an output end of the second gear set is in transmission connection with the first rack 22. A purpose of adding the second gear set is to increase a stroke of the weight, and the driven part and the second engaging portion have also changed correspondingly, but a way and mechanism of realizing the clutch mechanism have not changed.

(3) In some embodiments, as shown in FIG. 4 and FIG. 5, the clutch mechanism is an auto-controlled clutch mechanism, and the auto-controlled clutch mechanism is realized by utilizing an intermittent motion mechanism. The clutch mechanism is a mechanism including an incomplete gear cooperated with a complete gear, and includes a fourth gear 301 and a winding assembly 8 provided with a complete gear at one end. The fourth gear 301 is an incomplete gear and is provided with a tooth segment and a smooth segment. An input shaft of the four gear 301 is the input end, and a winding drum 111 of the winding assembly 8 is the output end. The fourth gear 301 is the driving part, the driven part is the winding assembly 8 with the complete gear at one end, the tooth segment on the fourth gear 301 is the first engaging portion, the smooth segment on the fourth gear 301 is the separating portion, and the second engaging portion is a tooth portion of the complete gear on the winding assembly 8. The separation state duration is set by an angle of the smooth segment on the fourth gear 301 or by the motor control module of the motor 101.

The input shaft of the fourth gear 301 is in transmission connection with the output shaft of the motor 101, and the fourth gear 301 is cooperated with the winding assembly 8 with the complete gear at one end. When the smooth segment on the fourth gear 301 is cooperated with the winding assembly 8, the driving part is separated from the driven part. In this case, the fourth gear 301 drives the winding assembly 8 to wind the flexible joint device 7 through a first gear set 302, so that the weight block 3 generates displacement relative to the base 1, and meanwhile, the elastic element 6 accumulates elastic potential energy. When the smooth segment on the fourth gear 301 is cooperated with the winding assembly 8, the driving part is separated from the driven part. In this case, the winding assembly 8 is not constrained by the driving force, and the elastic element 6 releases the elastic potential energy to drive the weight block 3, so that the flexible joint device 7 is paid off from the winding assembly 8, and the weight block 3 accelerates under the drive of the elastic element 6.

The clutch mechanism further includes the first gear set 302, the first gear set is arranged on the base 1, and the fourth gear 301 is in transmission connection with the winding assembly 8 through the first gear set 302. The fourth gear 301 is in transmission connection with an input end of the first gear set 302, and an output end of the first gear set 302 is in transmission connection with the winding assembly 8. The first gear set 302 may be composed of one, two or more gears in transmission with each other, or composed of a large gear and a small gear which are coaxially arranged. The small gear is in transmission fit with the fourth gear 301, and the big gear is in transmission fit with the winding assembly 8, so as to increase a transmission ratio between the fourth gear 301 and the winding assembly 8. A purpose of adding the first gear set 302 is to increase the stroke of the weight, and the driven part and the second engaging portion have also changed correspondingly, but the way and mechanism of realizing the clutch mechanism have not changed.

(4) In some embodiments, as shown in FIG. 6 and FIG. 7, the clutch mechanism is realized by utilizing a mechanism including a disk cam cooperated with a first ejector rod or pull rod. The disk cam is a first cam 401, which is the driving part of the clutch mechanism, the first ejector rod or pull rod 403 is the driven part, a smooth contact surface on the first cam 401 is the first engaging portion, a cross-sectional step on the first cam 401 is the separating portion, and the second engaging portion is an edge surface of the first ejector rod or pull rod 403 contacted with the cam. A power input shaft of the first cam 401 is the input end, and one end of the first ejector rod or pull rod 403 connected with the weight block (3) is the output end.

The input shaft of the first cam 401 is in transmission connection with the output shaft of the motor 101, the base 1 is provided with a limiting groove 402, the weight block 3 is in sliding fit with the limiting groove 402, and the first cam 401 is in cam fit with the weight block 3 to enable the weight block 3 to slide along the limiting groove 402. Specifically, the weight block 3 may be in sliding fit with the limiting groove 402 through the first ejector rod or pull rod 403, and the first cam 401 is in contact fit with a surface of the first cam 401 through the first ejector rod or pull rod 403, and a roller may also be used at one end of the first ejector rod or pull rod 403 in contact with the first cam 401. As shown in FIG. 6, a portion of the first ejector rod or pull rod 403 in contact with the first cam 401 may be one side of the first cam 401 far away from the weight block 3; and may also be one side of the first cam 401 close to the weight block 3 as shown in FIG. 7. A cross-sectional step is arranged on a contact surface of the first cam 401, and the cross-sectional step is a structure with a drop in radius formed on the surface of the first cam 401, thus realizing state transition from engagement to separation and then to engagement of the clutch mechanism based on the first cam 401. The first cam 401 abuts against the weight block 3 through the cam surface thereof to slide along the limiting groove 402, and meanwhile, the elastic element 6 accumulates the elastic potential energy. When a contact point between the first ejector rod or pull rod 403 and the first cam 401 moves from a larger radius of the first cam 401 to a smaller radius of the first cam 401, the first ejector rod or pull rod 403 instantaneously accelerates under a pulling force of the elastic element 6, and then stops instantly, thus forming strong vibration and enhancing the anti-icing and de-icing effect. Although the clutch mechanism is relatively simple, the separation state of the clutch mechanism cannot be maintained, so the separation state duration of the clutch mechanism cannot be set, and the action frequency of the device needs to be set by an edge surface circumference of the cam or a rotation speed output by the motor.

In some embodiments, as shown in FIG. 8, one end of the weight block 3 is rotatably connected with the base 1, and an elastic element 6, such as a torque spring, is included between the weight block 3 and the base 1, so that the weight block 3 can swing and accumulate potential energy relative to the base 1. The weight block 3 is rotatably connected with the base 1 through a rod of pendulum 9, so as to increase a swing amplitude and speed of the weight block 3 and make the gravity center of the device have a stronger sudden change effect. The base 1 is provided with a stop portion 10, and the stop portion 10 is arranged on a movement path of the weight block 3, so that the weight block 3 accelerates to swing to a certain speed, and then collides with the stop portion 10 to form violent vibration.

In some embodiments, as shown in FIG. 9, the base 1 is directly arranged on a binary fission sub-conductor spacer body, and two ends of the base are respectively connected with one wire clamp 13. The motor 101 is installed on the base 1, and a fifth gear 15 is installed on the output shaft of the motor 101. The fifth gear 15 is the incomplete gear and the fifth gear 15 is provided with at least one tooth segment and one smooth segment in a circumferential direction. The weight block 3 is rotationally connected with the base 1 through a rod of pendulum 9, and a connecting portion of the weight includes an elastic element 6, such as a torque spring. A sixth gear 16 is arranged at one end of the rod of pendulum 9 rotatably connected with the base 1. When the tooth segment on the fifth gear 15 is engaged with the sixth gear 16, the rod of pendulum 9 is driven to rotate, and the potential energy accumulated by the weight block 3 is increased. When the smooth segment on the fifth gear 15 is cooperated with the sixth gear 16, the rod of pendulum 9 and the weight block 3 accelerate to swing under the action of the elastic element 6 (such as the torque spring) and/or gravity until the weight block 3 hits the base 1 or the wire clamp 13 at one side, resulting in violent vibration, and realizing anti-icing and de-icing.

In some embodiments, as shown in FIG. 10, the device is applied to a quaternary fission sub-conductor spacer of an overhead transmission line, and a frame body of the sub-conductor spacer is equivalent to the base 1 of the device. The base 1 is provided with a slideway 5, and the weight block 3 is in sliding fit with the slideway 5. The slideway 5 may be a straight rail or a curved rail with a set path, and a structural form of the slideway may be either a beam shape or a sleeve shape that can directly or indirectly guide the movement of the weight block 3, as long as the weight block 3 can move on the base 1 along a preset trajectory.

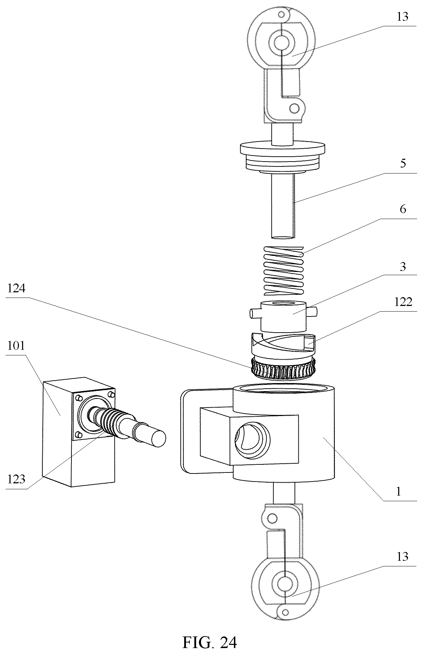

In some embodiments, as shown in FIG. 24, the sudden change of center of gravity is realized by the cooperation of the weight block 3 and a cylindrical cam 122, and the motor 101 drives a turbine 124 and a worm 123 speed reduction mechanism. The cylindrical cam 122 is arranged on the turbine 124, and an end face of the cylindrical cam 122 drives the weight block 3 to slide up and down along the slideway 5 on the base 1 through an ejector rod or a pull rod which is in conflict with the cylindrical cam. When the weight block 3 crosses a cross-sectional step on the end face of the cylindrical cam 122, the gravity center of the weight block 3 suddenly changes, which in turn causes the gravity center of the whole device to suddenly change.

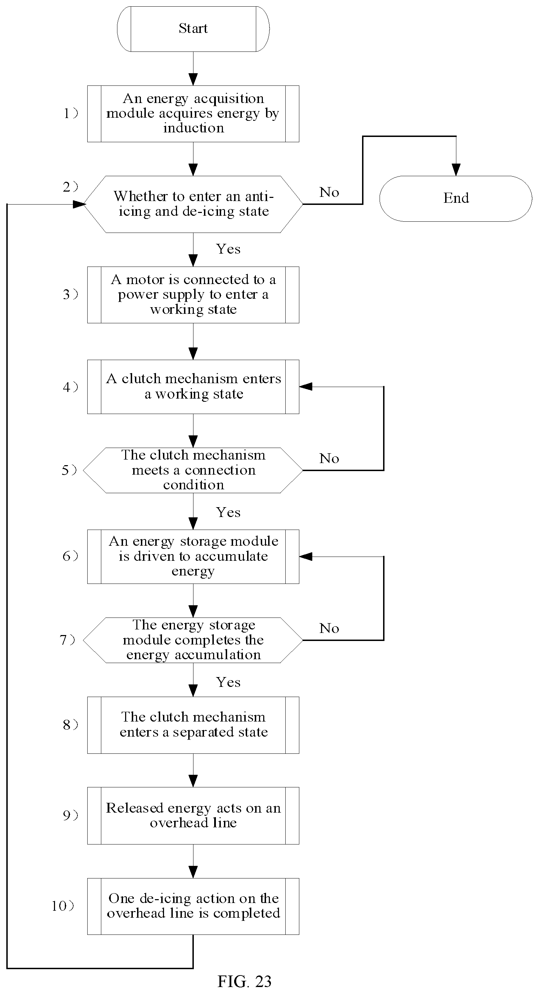

FIG. 23 illustrates an anti-icing and de-icing workflow of the present disclosure. When the device is running, the energy acquisition module provides power supply for the whole device, and the device decides whether to enter into an anti-icing and de-icing state according to field meteorological conditions, line icing types and states, or manual instructions. Once the device enters into the anti-icing and de-icing state, the energized motor 101 continuously outputs mechanical energy. When the clutch mechanism enters into the engaging state, the motor 101 will slowly drive the weight block 3 away from the initial position relative to the base 1 through the clutch mechanism, and with the displacement of the weight block 3, the potential energy module will slowly accumulate the elastic potential energy of the spring and the gravity potential energy of the weight. When the weight block 3 moves to a critical position of a termination point, the energy accumulated by the device reaches an extreme value. When the weight block 3 crosses the critical position of the termination point, the clutch mechanism enters into the separation state, the electric driving assembly 2 cuts off the driving force on the weight block 3, and the device instantly releases all the accumulated potential energy to the conductor or the contact system. With the energy release, the weight block 3 returns to the initial position again, and the device completes one cycle from energy accumulation to energy release. The above action process is repeated periodically, so that the overhead line or the railway contact system generates vibration effects with a certain frequency according to different icing types, and realizes anti-icing and de-icing of the overhead transmission line. Periodic vibration not only solves a problem that rime and mixed ice are closely bonded and difficult to de-ice, but also avoids line de-icing jump and forced shutdown caused by excessive rime accumulation.

In order to better meet field reality, the present disclosure optimizes, weighs and compromises the reliability, energy density and power density, energy use efficiency and anti-icing and de-icing effect of the device. The energy density and the power density of the device are improved under the condition of insufficient energy supply by utilizing the clutch mechanism and the potential energy module. Not only the reliability of the passive device is relatively high, but also the number of devices used is reduced by utilizing the simple and reliable auto-controlled clutch mechanism, so that the overall reliability of the device is greatly improved. In addition, parameters of the motor, the reliability of the motor, the transmission ratio of the gear shifting mechanism, the parameters of the incomplete gear, the parameters of the potential energy module or the spring, the mass and the movement distance of the weight block 3 can be comprehensively optimized, so as to improve the overall performances of the device.

In some embodiments, the base 1 may be a cylindrical cavity structure, in which the winding assembly 8, the flexible joint device 7, the weight block 3 and the elastic element 6 are axially arranged in sequence. A body part of the motor 101 may be arranged outside (or inside) the cavity structure, and the output shaft of the motor 101 may be inserted into the cylindrical structure. The cylindrical base 1 can protect the internal members to improve transmission stability and reliability of each member. In other embodiments, the weight block 3 may be suspended on the base 1 only through the flexible joint device 7.

Further, the base 1 is provided with a connecting portion 11 connecting with the outside, and the connecting portion 11 is used for connecting the overhead transmission line or the railway contact system. One or multiple connecting portions 11 may be provided. Specifically, as shown in FIG. 2, FIG. 6 and FIG. 7, the connecting portions 11 may be lug-shaped, and are arranged at two ends (or two sides) of the base 1 of the device, and are used for being installed at positions (FIG. 17, FIG. 18, FIG. 19 and FIG. 20) such as a sub-conductor spacer, an interphase spacer and a phase-to-ground spacer of the overhead transmission line by bolts, so that the device of this embodiment may be installed at different angles. Or, the base 1 of the device is a part of the sub-conductor spacer, the interphase spacer and the phase spacer (FIG. 1, FIG. 8, FIG. 9, FIG. 10, FIG. 21 and FIG. 22). The device not only undertakes the original functions of these spacers, but also has the function of sudden change of center of gravity, thus realizing the anti-icing and de-icing of the overhead transmission line.

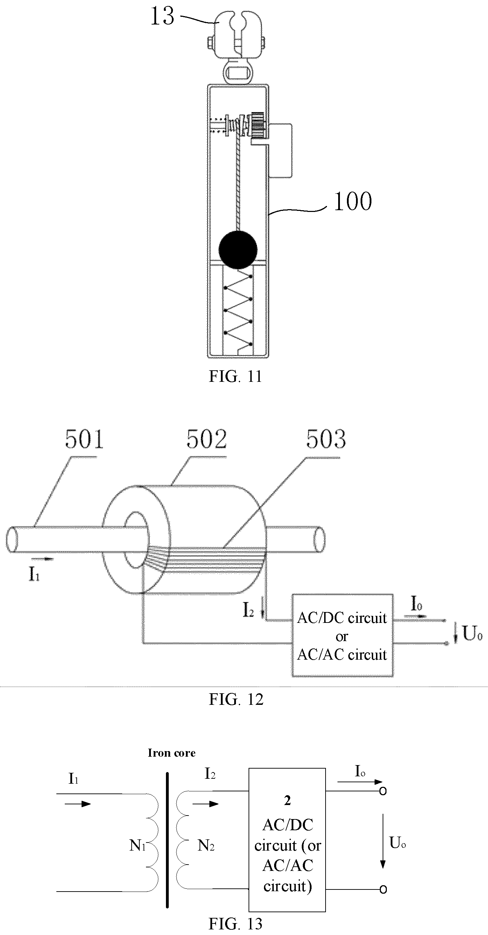

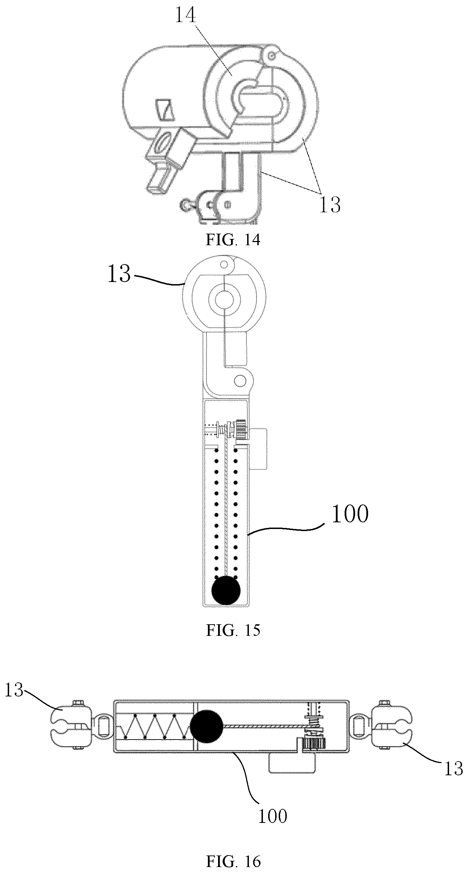

In some embodiments (FIG. 11, FIG. 15 and FIG. 16), the connecting portion 11 is a wire clamp 13, which is arranged at one end or two ends of the base 1 of the device and is used for directly connecting with a conductor of the overhead transmission line or the railway contact system. Specifically, as shown in FIG. 11 and FIG. 15, one end of the base 1 of the device is provided with a wire clamp 13 for connecting the base 1 to a single conductor or the railway contact system through the wire clamp 13. Alternatively, the two ends of the base 1 of the device are both provided with a wire clamp 13, which are used to connect between binary fission conductors or two single wires of other bundle conductors, as shown in FIG. 9 and FIG. 16.

The electric driving assembly 2 of the device further includes a gear shifting mechanism. The gear shifting mechanism is in transmission connection between the motor 101 and the clutch mechanism or between the clutch mechanism and the weight block 3, and is responsible for conversion and conduction of the acting force. The gear shifting mechanism may also be integrated or integrated with the motor 101 or integrated with the clutch mechanism. The gear shifting mechanism is preferably provided with a backstop structure. In addition to the mechanical gear shifting mechanism, the gear shifting mechanism may also be a common gear shifting mechanism in a breaking-closing operation mechanism of a circuit breaker, such as a hydraulic operating mechanism based on a solenoid valve and a hydraulic pump or an air compressor and a pneumatic motor or a hydraulic pump and a hydraulic motor, and the like, to complete the conversion and conduction of the acting force and the accumulation of the potential energy together with the potential energy module and the weight block 3. In this case, it is necessary to use an active device, such as an electromagnetic pressure relief valve and a high-pressure gas solenoid valve, to realize the clutch function together with the gear shifting mechanism. In the present disclosure, a mechanical gear shifting mechanism realized by a passive device is preferred, and correspondingly, the mechanical gear shifting mechanism may be a gear transmission mechanism, a turbine worm gear shifting mechanism or a planetary gear shifting mechanism, which can improve the running reliability and economy of the device, and the clutch mechanism cooperated with the mechanical gear shifting mechanism adopts passive control, so that the structure is simple and reliable, and the operation is economical and practical.

The device further includes an energy acquisition module, which can acquire wind energy, solar energy, magnetic field energy and the like. In this embodiment, the energy acquisition module includes one or multiple inductive power acquisition units 14 (as shown in FIGs. 12 and 13) equipotentially installed on a conductor or a sub-conductor of the overhead transmission line. The inductive power acquisition unit includes an iron core 502 sheathed outside a conductor 501, and a secondary coil 503 is wound around the iron core 502. For example, the conductor 501 (overhead line) carries a first current I1, and an induction circuit I2 is generated on the secondary coil. An output voltage Uo and an output current Io are generated by an AC/DC circuit or an AC/AC circuit, and output to the motor 101 or output to the motor 101 through an energy storage battery or capacitor. The inductive power acquisition unit 14 is used for converting magnetic field energy around the sub-conductor into electric energy and providing the electric energy to the electric driving assembly 2. The multiple inductive power acquisition units 14 may be connected in series or in parallel.

In some embodiments, as shown in FIG. 14 and FIG. 15, the base 1 is provided with a wire clamp 13 for connecting a sub-conductor, and the inductive power acquisition unit 14 is arranged in the wire clamp 13 (FIG. 14). The inductive power acquisition unit 14 is loaded by utilizing the inherent wire clamp 13, which simplifies the structure.

In some embodiments, the energy acquisition module includes a photovoltaic battery panel and an energy storage capacitor or an energy storage battery connected with the photovoltaic battery panel. The photovoltaic battery panel is used for converting solar energy into electric energy and storing the electric energy in the energy storage capacitor or the energy storage battery, and the energy storage capacitor or the energy storage battery is installed on the base 1 for supplying energy to the motor 101.

The embodiments of the present disclosure further provide a sub-conductor spacer, an interphase spacer and a phase-to-ground spacer for anti-icing and de-icing (installed between a phase conductor and an overhead ground wire), including a spacer body and one or more anti-icing and de-icing device based on sudden change of center of gravity 100 as described in the above embodiments and installed on the spacer body. Motion directions of the weights 3 of the multiple anti-icing and de-icing devices based on sudden change of center of gravity 100 may be the same or different, parallel or crossed. Adding a controller make it possible set an action order, an action sequence and an action frequency of the weights 3 of the multiple the multiple anti-icing and de-icing devices based on sudden change of center of gravity 100 as required. For example, as shown in FIG. 17, the device is horizontally installed in a frame body of a quaternary fission sub-conductor spacer, and the quaternary fission sub-conductor spacer drives the conductor to swing and vibrate through the horizontal movement of the weight block 3 of the device. As shown in FIG. 18, two devices are installed side by side in the frame body of the quaternary fission sub-conductor spacer, and the weights 3 of the two devices move rapidly in the same direction (when the clutch mechanism is separated), and timing of the movement may be alternately to improve a de-icing vibration frequency, and the weights may also move simultaneously to improve anti-icing and de-icing vibration strength. As shown in FIG. 19, two devices are installed side by side in the frame body of the quaternary fission sub-conductor spacer, and the weights 3 of the two devices move rapidly in opposite directions (when the clutch mechanism is separated), so that the two devices can match to realize alternating vibration in two opposite directions. As shown in FIG. 20, the two devices are vertically installed in the frame body of the quaternary fission sub-conductor spacer, thus realizing vibration in two mutually vertical directions. For example, as shown in FIGs. 21 and 22, the device is embedded in a connection between a composite insulator 200 and the conductor as a part of the interphase spacer and the phase-to-ground spacer body, and a vibration effect generated by sudden change of center of gravity is directly applied to the conductor, or transmitted to another phase conductor or overhead ground wire through the composite insulator 200, or the spacer is regarded as a part of the device with sudden change of center of gravity, and the device with sudden change of center of gravity transmits the vibration effect to the phase conductor or the overhead ground wire through an insulation part of the device. By installing multiple devices with different directions and strengths of sudden change of center of gravity at the same position of the overhead transmission line, the vibration frequency and strength can be changed, and the anti-icing and de-icing effect of sudden change of center of gravity on the overhead transmission line can be improved through a time difference. It should be noted that the above examples only take the quaternary fission spacer or the interphase spacer and the phase-to-ground spacer as examples, and the device may also be applied to sub-conductor spacers, interphase spacers and phase-to-ground spacers of other bundle conductors in an adaptive structure form.

The present disclosure further provides an anti-icing and de-icing system. The system includes multiple anti-icing and de-icing devices based on sudden change of center of gravity 100 or multiple anti-icing and de-icing spacers as described above. The multiple anti-icing and de-icing devices based on sudden change of center of gravity or the multiple anti-icing and de-icing spacer are distributed and installed in easy icing segment of the overhead transmission line or the railway contact system at a certain distance. By adding an intelligent communication control module in the anti-icing and de-icing device based on sudden change of center of gravity 100 or the anti-icing and de-icing spacer, coordinating and controlling the anti-icing and de-icing modes by utilizing a remote master station or a manual command or autonomous control, and combining an icing condition and a running environment of the line to intelligently control and act timely, reasonably selecting an action strategy of the device and the anti-icing and de-icing modes of the line will reduce influence of unbalanced de-icing on the overhead transmission line.

The intelligent communication control module includes a communication unit, a control module and an intelligent management module. The communication module communicates with the master station, a manual operator and other devices through a wireless network, and has functions of routing, relaying and forwarding information of other communication modules, and forms an ad-hoc network with communication units of other devices. The intelligent communication control module may also communicate with other anti-icing and de-icing methods or devices according to other inventions and principles, and match with each other to achieve better anti-icing and de-icing effects. Different control modules interact with each other through the communication unit to form a control system, so that the multiple anti-icing and de-icing devices based on sudden change of center of gravity 100 or the multiple spacers can be controlled to act at a set time sequence and/or frequency. The intelligent management unit has a self-checking function, which is responsible for collecting state information of the environment and the device and reporting the state information to the master station or the operator through the communication unit as needed, and is responsible for judging whether to turn on or off the de-icing function or selecting the required anti-icing and de-icing strategy by synthesizing various information. Typical self-checking function includes detecting a movement acceleration of the base 1 by adding a first acceleration sensor in the intelligent communication control module, and comparing the acceleration with a set acceleration threshold, so as to judge whether the sudden change of center of gravity generated by the device meets the requirements. The typical anti-icing and de-icing strategy includes: in a tensile segment or a suspension segment, the sudden change of center of gravity of the device gradually transitions from two sides to the middle, or vice versa; two adjacent anti-icing and de-icing devices select different directions of sudden change of center of gravity at the same moment; and for a heavy-icing area, in addition to increasing a distributed number of the anti-icing and de-icing devices, action intensity and frequency of the devices can also be improved. The state information collected by the intelligent communication control module includes: weather conditions, icing conditions, acceleration, vibration, audio and video, geographical location, time and conductor current state information. If one device includes multiple device with sudden change of center of gravity, the intelligent management unit is also responsible for coordinating the action order, time interval, direction and frequency of each device. The control module is electrically connected with the motor 101, and is responsible for controlling the action of the motor 101, translating an instruction issued by the intelligent management unit into an execution logic, and sending the execution logic to actuators of the sudden change of center of gravity, i.e., an energy supply module, the base 1, the electric driving assembly 2, the weight block 3 and the potential energy module. The actuator is responsible for receiving the instruction of the intelligent communication control module and executing the function of sudden change of center of gravity according to the instruction. By adding intelligent coordinated control, a de-icing process of an iced overhead transmission line is effectively intervened to ensure safety of the overhead transmission line, and the devices in different positions are coordinated to conduct orderly de-icing, so as to improve the line de-icing jump problem caused by large-scale simultaneous de-icing, and reduce the serious impact of "full-range de-icing", "centralized de-icing" and "unbalanced de-icing" on the overhead transmission line and a power grid.

The present disclosure may also be applied to aspects of anti-galloping and anti-vibration of the overhead transmission line, i.e., an anti-galloping and anti-vibration device and system for an overhead transmission line. The system includes multiple anti-galloping and anti-vibration (anti-icing or de-icing) devices based on sudden change of center of gravity for the overhead transmission line, which are distributed on overhead transmission lines as described above. The multiple anti-galloping and anti-vibration (anti-icing or de-icing) devices based on sudden change of center of gravity for the overhead transmission line are installed on the overhead transmission line in a distributed manner. By utilizing a second acceleration sensor (which may be the same sensor as the first acceleration sensor) as well as communication and control devices, the acceleration sensor can be utilized to detect whether a sudden change of center of gravity action of the device is normal, and multiple second acceleration sensors can be utilized to detect directions and magnitudes of accelerations of each position generated by the galloping or vibration of the overhead transmission line, and control each anti-icing and de-icing device based on sudden change of center of gravity 100 or the anti-icing and de-icing spacer rod to act, so that an acting force opposite to the galloping or vibration direction is formed on the galloping or vibration overhead transmission line, and the galloping and the vibration of the conductor are inhibited or reduced. Therefore, the device not only has the anti-icing and de-icing function, but also has the anti-galloping and anti-vibration function of the overhead transmission line through reasonable use and coordinated control.

It should be noted that the terms "including", "comprising" or any variations thereof are intended to embrace a non-exclusive inclusion, such that a process, a method, an article, or an device including a series of elements, includes not only those elements but also includes other elements not expressly listed, or also incudes elements inherent to such process, method, article, or device. In the absence of further limitation, an element defined by the phrase "including one..." does not exclude the presence of additional identical element in the process, method, article, or device.

The above are only specific embodiments of the present disclosure, so that those skilled in the art can understand or realize the present disclosure. Various modifications to these embodiments will be apparent to those skilled in the art, and the generic principles defined herein may be embodied in other embodiments without departing from the spirit or scope of the present disclosure. Therefore, the present disclosure will not to be limited to these embodiments shown herein, but is to be in conformity with the widest scope consistent with the principles and novel features disclosed herein.

### Industrial Applicability

According to the present disclosure, when the clutch mechanism is in the engaging state, the electric driving assembly drives the weight to generate displacement relative to the base, and when the clutch mechanism is in the separation state, the electric driving assembly cuts off the driving to the weight. When the clutch mechanism is engaged, the potential energy module is used for accumulating the potential energy when the weight generates displacement relative to the base; and when the clutch mechanism is separated, the driving force of the electric driving assembly on the weight is cut off, the potential energy contained in the potential energy module is rapidly released, so that the weight moves quickly, thus causing the whole gravity center of the device to suddenly change, and forming vibration to be transmitted to the overhead transmission line, so that the icing is removed. The present disclosure has very excellent industrial applicability.

## Claims

1. An anti-icing and de-icing device based on sudden change of center of gravity, used for being fixedly installed on an overhead transmission line or a railway contact system, **characterized in that**, the anti-icing and de-icing device comprises a base (1) and an electric driving assembly (2), a weight block (3) and a potential energy module arranged on the base (1);
the electric driving assembly (2) comprises a motor (101) and a clutch mechanism, and the motor (101) drives the weight block (3) to generate displacement relative to the base through the clutch mechanism;
the clutch mechanism comprises an input end, an output end, a driving part and a driven part; the input end is connected with the driving part, and the driven part is connected with the output end; and there is only two mutually exclusive and controllable working states comprising engaging state and separation states between the driving part and the driven part;
when the driving part and the driven part are in the engaging state, the driving part transmits an acting force, torque or motion to the driven part; and when the driving part and the driven part are in the separation state, the driving part is cut off to transmit the acting force, torque or motion to the driven part;
the motor (101) is in transmission connection with the input end, and the output end is connected with the weight block (3);
when the driving part and the driven part are in the engaging state, the electric driving assembly (2) drives the weight block (3) to generate displacement relative to the base (1); and when the driving part and the driven part are in the separation state, the electric driving assembly (2) cuts off driving to the weight block (3);
the potential energy module is used for accumulating potential energy when the weight block (3) generates the displacement relative to the base (1), and releasing the potential energy when the driving part and the driven part are in the separation state; and
the potential energy module comprises an elastic element (6), one end of the elastic element (6) is connected with the weight block (3), and the other end of the elastic element is connected with the base (1); and when the weight block (3) generates the displacement relative to the base (1), the elastic element (6) generates elastic deformation, and the potential energy accumulated by the potential energy module comprises elastic potential energy generated by the elastic deformation of the elastic element.

2. The anti-icing and de-icing device based on sudden change of center of gravity according to claim 1, **characterized in that**, the base (1) is provided with a cavity, and the weight block (3), the potential energy module and the clutch mechanism are arranged in the cavity.

3. The anti-icing and de-icing device based on sudden change of center of gravity according to claim 2, **characterized in that**, the cavity is a sealing structure.

4. The anti-icing and de-icing device based on sudden change of center of gravity according to claim 2, **characterized in that**, the base (1) is a cylindrical structure.

5. The anti-icing and de-icing device based on sudden change of center of gravity according to claim 1, **characterized in that**, multiple elastic elements (6) are provided.

6. The anti-icing and de-icing device based on sudden change of center of gravity according to claim 1, **characterized in that**, the elastic element (6) is a spring.

7. The anti-icing and de-icing device based on sudden change of center of gravity according to claim 6, **characterized in that**, the spring is a pneumatic spring, a cylindrical spring, a leaf spring, a disc spring or a torque spring.

8. The anti-icing and de-icing device based on sudden change of center of gravity according to claim 1, **characterized in that**, the potential energy accumulated by the potential energy module further comprises gravity potential energy of the weight block (3).

9. The anti-icing and de-icing device based on sudden change of center of gravity according to claim 1, **characterized in that**, further comprising a motor control module, wherein the motor control module is electrically connected with the motor (101), and used for controlling actions of the motor (101), and the actions comprise forward rotation, reverse rotation, stopping and speed regulation.

10. The anti-icing and de-icing device based on sudden change of center of gravity according to claim 1, **characterized in that**, the driving part and the driven part is set with a separation state duration.

11. The anti-icing and de-icing device based on sudden change of center of gravity according to claim 10, **characterized in that**, an action frequency of the anti-icing and de-icing device based on sudden change of center of gravity is set based on the separation state duration of the driving part and the driven part.

12. The anti-icing and de-icing device based on sudden change of center of gravity according to claim 10, **characterized in that**, the separation state duration of the driving part and the driven part is set by controlling the rotation, stopping and a rotation speed of the motor (101).

13. The anti-icing and de-icing device based on sudden change of center of gravity according to claim 1, **characterized in that**, the clutch mechanism is a controlled clutch mechanism, and further comprises a clutch control unit and a position switch, the clutch control unit is used for controlling engagement and separation of the driving part and the driven part, the position switch is arranged on the base (1) and used for acquiring a position of at least one of the driving part, the driven part and the weight block (3), and the clutch control unit controls the driving part and the driven part to enter into the engaging state or separation state based on an output of the position switch.

14. The anti-icing and de-icing device based on sudden change of center of gravity according to claim 1, **characterized in that**, the clutch mechanism is an auto-controlled clutch mechanism;
the auto-controlled clutch mechanism automatically enters into the engaging state or separation state by utilizing change of a motion state of the driving part or the driven part and/or change of a structure change of the auto-controlled clutch mechanism; and
the driving part is provided with a first engaging portion and a separating portion, the driven part is provided with a second engaging portion, when the first engaging portion is cooperated with the second engaging portion, the driving part and the driven part enter into the engaging state, and when the separating portion is cooperated with the second engaging portion, the driving part and the driven part enter into the separation state.

15. The anti-icing and de-icing device based on sudden change of center of gravity according to claim 14, **characterized in that**, the driving part is an incomplete gear, and is provided with a tooth segment and a smooth segment arranged in a circumferential direction sequentially, the first engaging portion is the tooth segment, and the separating portion is the smooth segment; and the driven part is a rack, and the second engaging portion is a tooth segment on the rack.

16. The anti-icing and de-icing device based on sudden change of center of gravity according to claim 14, **characterized in that**, the driving part is an incomplete gear, and is provided with a tooth segment and a smooth segment arranged in a circumferential direction sequentially, the first engaging portion is the tooth segment, and the separating portion is the smooth segment; and
the driven part is a gear, and the second engaging portion is a tooth portion on the gear; or, the driven part is a gear set, and the second engaging portion is a tooth portion of an input gear of the gear set.

17. The anti-icing and de-icing device based on sudden change of center of gravity according to claim 15 or 16, **characterized in that**, the driving part and the driven part is set with a separation state duration, and the separation state duration of the driving part and the driven part is set base on a radian of the smooth segment of the incomplete gear.

18. The anti-icing and de-icing device based on sudden change of center of gravity according to claim 14, **characterized in that**, the driving part is a cam, a contact surface between the cam and the driven part comprises an edge surface smooth portion and a cross-sectional step portion, the first engaging portion is the edge surface smooth portion, and the separating portion is the cross-sectional step portion; and the driven part is an ejector rod or a pull rod, the ejector rod or the pull rod is in sliding fit with the base, and the second engaging portion is an edge surface of the ejector rod or the pull rod contacted with the cam.

19. The anti-icing and de-icing device based on sudden change of center of gravity according to claim 18, **characterized in that**, the cam is a disk cam or a cylindrical cam.

20. The anti-icing and de-icing device based on sudden change of center of gravity according to claim 1, **characterized in that**, further comprising a winding assembly (8) and a flexible joint device (7), wherein the motor (101) is in transmission connection with the winding assembly (8) through the clutch mechanism; when the driving part is engaged with the driven part, the motor (101) drives the winding assembly (8) to rotate; when the driving part is separated from the driven part, drive of the motor (101) to the winding assembly (8) is cut off; and one end of the flexible joint device (7) is connected with the weight block (3), and the other end of the flexible joint device is wound on the winding assembly (8) to drive the weight block (3) to generate the displacement relative to the base (1) through rotation of the winding assembly (8).

21. The anti-icing and de-icing device based on sudden change of center of gravity according to claim 20, **characterized in that**, the input end comprises a second gear (102) in transmission connection with an output shaft of the motor (101); the output end comprises a winding drum (111); the driving part is a first end face cam (103) arranged on a third gear (104); the driven part is a second end face cam (107) arranged on the winding drum (111); a cylindrical spring (110) is used for tightly connecting the first end face cam (103) and the second end face cam (107) in the engaging state; and a first travel switch (106) and a second travel switch (108) are used for acquiring a position of the first end face cam (103), and the position information is used for controlling the motor (101) to realize engagement and separation of the first end face cam (103) and the second end face cam (107);
the winding assembly (8) comprises a fixed shaft (109), the third gear (104) and the winding drum (111); the fixed shaft (109) is fixedly installed on the base (1), and an outer wall of a first end of the fixed shaft (109) is provided with a threaded segment (105); the third gear (104) is sleeved outside the fixed shaft (109) and is in threaded fit with the threaded segment (105); the third gear (104) is engaged with the second gear (102), and under the drive of the motor (101), the third gear (104) removes axially along the threaded segment (105), and remains being engaged with the second gear (102) during movement; the winding drum (111) is rotatably sleeved outside the fixed shaft (109) and is used for winding the flexible joint device (7); one side of the third gear (104) toward the winding drum (111) is provided with the first end face cam (103), and one side of the winding drum (111) toward the third gear (104) is provided with the second end face cam (107); when the third gear (104) rotates in a first direction, the first end face cam (103) is in cam fit with the second end face cam (107), which enables the first end face cam (103) and the second end face cam (107) to slide and rotate relative to each other; and when the third gear (104) rotates in a second direction, the first end face cam (103) and the second end face cam (107) are clamped, which enable the first end face cam (103) to drive the second end face cam (107) to rotate together;
the fixed shaft (109) is provided with the first travel switch (106) and the second travel switch (108), the first travel switch (106) is located on one side of the third gear (104) back to the winding drum (111), the second travel switch (108) is located between the third gear (104) and the winding drum (111), a limiting step (112) is arranged on the fixed shaft (109), and the limiting step (112) is located between the second travel switch (108) and the second end face cam (107) and is used for limiting the second end face cam (107) to slide in a direction of the motor (101); when the third gear (104) moves to trigger the first travel switch (106), the first travel switch (106) is triggered to send an instruction to the motor (101), the motor (101) drives the third gear (104) to rotate in the first direction, and the first end face cam (103) pushes the second end face cam (107) to move in a direction away from the second gear (102); and when the third gear (104) moves to trigger the second travel switch (108), an instruction is sent to the motor (101), and the motor (101) drives the third gear (104) to rotate in the second direction to enable end faces of the first end face cam (103) and the second end face cam (107) to be buckled with each other, and drives the winding drum (111) to rotate in the second direction to wind the flexible joint device (7) on the winding drum (111); and
the cylindrical spring (110) is compressed and connected between one side of the winding drum (111) away from the third gear (104) and the base (1), and the cylindrical spring (110) is sleeved outside the fixed shaft (109) and is used for providing a pushing force for the winding drum (111) close to the third gear (104) when the first end face cam (103) rotates in the second direction to achieve that the second end face cam (107) and the first end face cam (103) are attached and kept in a buckled state; wherein, a length of the cylindrical spring (110) in a natural state satisfies that: when the third gear (104) moves to trigger the first travel switch (106), the second end face cam (107) and the first end face cam (103) are separated or spaced apart from each other to enable the winding drum (111) to be free to rotate on the fixed shaft (109).

22. The anti-icing and de-icing device based on sudden change of center of gravity according to claim 14, **characterized in that**, the clutch mechanism is realized by utilizing a mechanism comprising an incomplete gear cooperated with a rack, and comprises a first gear (21) in transmission connection with the motor (101) and a first rack (22) cooperated with the first gear, the first gear (21) is an incomplete gear, and provided with a tooth segment and a smooth segment arranged in a circumferential direction sequentially; the first gear (21) is the driving part, and the first rack (22) is the driven part; the tooth segment on the first gear (21) is the first engaging portion, the smooth segment on the first gear (21) is the separating portion, and a tooth portion on the first rack (22) is the second engaging portion; and an input shaft of the first gear (21) is the input end, and the first rack (22) is the output end; and
one of the motor (101) and the first rack (22) is installed on the base (1), and the other is installed on the weight block (3), when the tooth segment on the first gear (21) is cooperated with the first rack (22), the driving part is engaged with the driven part; and when the smooth segment on the first gear (21) is cooperated with the first rack (22), the driving part is separated from the driven part.

23. The anti-icing and de-icing device based on sudden change of center of gravity according to claim 22, **characterized in that**, the clutch mechanism further comprises a second gear set, the second gear set is arranged on the base (1), and the first gear (21) is in transmission connection with the first rack (22) through the second gear set; and the first gear (21) is in transmission connection with an input gear of the second gear set, and an output gear of the second gear set is in transmission connection with the first rack (22).

24. The anti-icing and de-icing device based on sudden change of center of gravity according to claim 14, **characterized in that**, the clutch mechanism is realized by utilizing a mechanism comprising an incomplete gear cooperated with a complete gear, and comprises a fourth gear (301) and a winding assembly (8) with a complete gear at one end, and the fourth gear (301) is an incomplete gear and is provided with a tooth segment and a smooth segment;
an input shaft of the fourth gear (301) is the input end, and a winding drum (111) of the winding assembly (8) is the output end; the fourth gear (301) is the driving part, the tooth segment on the fourth gear (301) is the first engaging portion, and the smooth segment on the fourth gear (301) is the separating portion; and the winding assembly (8) with the complete gear at one end is the driven part, and the second engaging portion is a tooth portion of the complete gear on the winding assembly (8); and
the input shaft of the fourth gear (301) is in transmission connection with the output shaft of the motor (101), and the fourth gear (301) is cooperated with the winding assembly (8) with the complete gear at one end; when the tooth segment on the fourth gear (301) is cooperated with the winding assembly (8), the driving part is engaged with the driven part; and when the smooth segment on the fourth gear (301) is cooperated with the winding assembly (8), the driving part is separated from the driven part.

25. The anti-icing and de-icing device based on sudden change of center of gravity according to claim 24, **characterized in that**, the clutch mechanism further comprises a first gear set (302), the first gear set is arranged on the base (1), and the fourth gear (301) is in transmission connection with the winding assembly (8) through the first gear set (302); and the fourth gear (301) is in transmission connection with an input end the first gear set (302), and an output end of the first gear set (302) is in transmission connection with the winding assembly (8).

26. The anti-icing and de-icing device based on sudden change of center of gravity according to claim 14, **characterized in that**, one end of the weight block (3) is rotationally connected with the base (1) to enable the weight block (3) to oscillate relative to the base (1).

27. The anti-icing and de-icing device based on sudden change of center of gravity according to claim 26, **characterized in that**, the weight block (3) is rotationally connected with the base (1) through a rod of pendulum (9); and the elastic element (6) is a torque spring arranged between the weight block (3) and the base (1).

28. The anti-icing and de-icing device based on sudden change of center of gravity according to claim 27, **characterized in that**, the clutch mechanism is realized by utilizing a mechanism comprising an incomplete gear cooperated with a rack, and comprises a fifth gear (15) and a sixth gear (16), and the fifth gear (15) is the incomplete gear and is provided with a tooth segment and a smooth segment;
the fifth gear (15) is the driving part, the sixth gear (16) is the driven part, the tooth segment on the fifth gear (15) is the first engaging portion, and the smooth segment on the fifth gear (15) is the separating portion; the second engaging portion is a tooth portion on the sixth gear (16); an input shaft of the fifth gear (15) is the input end, and the swing rod (9) connected with the sixth gear (16) is the output end; and
the fifth gear (15) is in transmission connection with the output shaft of the motor (101), one end of the weight block (3) rotationally connected with the base (1) is provided with the sixth gear (16), when the tooth segment on the fifth gear (15) is cooperated with the sixth gear (16), the driving part is engaged with the driven part, and when the smooth segment on the fifth gear (15) is cooperated with the sixth gear (16), the driving part is separated from the driven part.

29. The anti-icing and de-icing device based on sudden change of center of gravity according to claim 14, **characterized in that**, the clutch mechanism is realized by utilizing a mechanism comprising a first cam cooperated with a first ejector rod or pull rod; the first cam (401) is the driving part, the first ejector rod or pull rod (403) is the driven part, a smooth contact surface on the first cam (401) is the first engaging portion, a cross-sectional step on the first cam (401) is the separating portion, and the second engaging portion is an edge surface of the first ejector rod or pull rod (403) contacted with the cam; and a power input shaft of the first cam (401) is the input end, and one end of the first ejector rod or pull rod (403) connected with the weight block (3) is the output end; and
the first cam (401) is in transmission connection with the motor (101), the base (1) is provided with a limiting groove (402), the weight block (3) is in sliding fit with the limiting groove (402), the elastic element (6) is a cylindrical spring arranged between the weight block (3) and the base (1), the first cam (401) is in cam fit with the weight block (3) to enable the weight block (3) sliding along the limiting groove (402), a cross-sectional step is arranged on a contact surface of the first cam (401), and when the first ejector rod or pull rod (403) crosses the cross-sectional step, it achieves state transition from engagement to separation and then to engagement of the driving part and the driven part.

30. The anti-icing and de-icing device based on sudden change of center of gravity according to claim 1, **characterized in that**, the base (1) is provided with a connecting portion (11), and the connecting portion (11) is used for connecting the overhead transmission line or the railway contact system.

31. The anti-icing and de-icing device based on sudden change of center of gravity according to claim 30, **characterized in that**, one or multiple connecting portions (11) are provided.

32. The anti-icing and de-icing device based on sudden change of center of gravity according to claim 30, **characterized in that**, the connecting portion (11) is a wire clamp (13) or a rotary wire clamp.

33. The anti-icing and de-icing device based on sudden change of center of gravity according to claim 1, **characterized in that**, further comprising an energy acquisition module, wherein:
the energy acquisition module comprises one or multiple inductive power acquisition units (14) equipotentially installed on a conductor or a sub-conductor of the overhead transmission line, the inductive power acquisition unit (14) is used for converting magnetic field energy around the sub-conductor into electric energy and providing the electric energy to the electric driving assembly (2); or,
the energy acquisition module comprises a photovoltaic battery panel and an energy storage capacitor or an energy storage battery connected with the photovoltaic battery panel.

34. The anti-icing and de-icing device based on sudden change of center of gravity according to claim 33, **characterized in that**, the multiple inductive power acquisition units (14) are connected in series or in parallel.

35. The anti-icing and de-icing device based on sudden change of center of gravity according to claim 33, **characterized in that**, the inductive power acquisition unit (14) is arranged a wire clamp or a rotary wire clamp of the connecting portion (11).

36. The anti-icing and de-icing device based on sudden change of center of gravity according to claim 1, **characterized in that**, further comprising a gear shifting mechanism, wherein the gear shifting mechanism is in transmission connection between the motor (101) and the clutch mechanism or in transmission connection between the clutch mechanism and the weight block (3).

37. The anti-icing and de-icing device based on sudden change of center of gravity according to claim 36, **characterized in that**, the gear shifting mechanism is provided with a backstop structure.

38. The anti-icing and de-icing device based on sudden change of center of gravity according to claim 36, **characterized in that**, the gear shifting mechanism is a mechanical gear shifting mechanism.

39. The anti-icing and de-icing device based on sudden change of center of gravity according to claim 38, **characterized in that**, the mechanical gear shifting mechanism is a gear transmission mechanism, a turbine worm gear shifting mechanism or a planetary gear shifting mechanism.

40. The anti-icing and de-icing device based on sudden change of center of gravity according to claim 1, **characterized in that**, further comprising a communication module, which is used for receiving master station or manual commands, or communicating or relaying communication between different devices.

41. The anti-icing and de-icing device based on sudden change of center of gravity according to claim 1, **characterized in that**, further comprising a first acceleration sensor, wherein the first acceleration sensor is used for detecting an acceleration of movement of the base (1) and comparing the acceleration with a set acceleration threshold to form state information.

42. The anti-icing and de-icing device based on sudden change of center of gravity according to any one of claims 1 to 41, **characterized in that**, the base (1) is provided with a stop portion (10), the stop portion (10) is arranged on a movement path of the weight block (3) and used for stopping the movement of the weight block (3) when the potential energy module releases the potential energy.

43. The anti-icing and de-icing device based on sudden change of center of gravity according to claim 42, **characterized in that**, the stop portion (10) further comprises an elastic pad, and the elastic pad is arranged on the stop portion (10) or between different interlayers of the stop portion (10) for buffering impact between the weight block (3) and the stop portion (10), and avoiding rigid collision between the weight block (3) and the stop portion (10).

44. An anti-icing and de-icing spacer, **characterized in that**, being used between bundle conductors, between phase conductors and phase conductors or between phase conductors and overhead ground wires of an overhead power transmission line, comprising a spacer body and at least one anti-icing and de-icing device based on sudden change of center of gravity according to any one of claims 1 to 43 installed on the spacer body.

45. The anti-icing and de-icing spacer according to claim 44, **characterized in that**, multiple anti-icing and de-icing devices based on sudden change of center of gravity according to any one of claims 1 to 43 are installed on the spacer body, and motion directions of weights (3) of the multiple anti-icing and de-icing devices based on sudden change of center of gravity are parallel or crossed.

46. The anti-icing and de-icing spacer according to claim 45, **characterized in that**, the multiple anti-icing and de-icing devices based on sudden change of center of gravity according to any one of claims 1 to 43 are installed on the spacer body, a controller is further installed on the spacer body, and the controller is used for controlling motors (101) of the multiple anti-icing and de-icing devices based on sudden change of center of gravity to act at a set time sequence and/or frequency.

47. An anti-icing and de-icing system for an overhead transmission line or a railway contact system, **characterized in that**, comprising multiple anti-icing and de-icing devices based on sudden change of center of gravity according to any one of claims 1 to 43 or multiple anti-icing and de-icing spacers according to any one of claims 44 to 46, wherein the multiple anti-icing and de-icing devices based on sudden change of center of gravity or the multiple anti-icing and de-icing spacers are distributed and installed on an overhead transmission line or a railway contact system.

48. The anti-icing and de-icing system according to claim 47, **characterized in that**, further comprising a control system, wherein the control system is used for controlling the multiple anti-icing and de-icing devices based on sudden change of center of gravity or the multiple anti-icing and de-icing spacers to act at a set sequence and/or frequency.

49. An anti-galloping system for an overhead transmission line, **characterized in that**, comprising multiple second acceleration sensors distributed on the overhead transmission line and multiple anti-icing and de-icing devices based on sudden change of center of gravity according to any one of claims 1 to 43, or multiple anti-icing and de-icing spacers according to any one of claims 44 to 46, wherein the multiple second acceleration sensors are used for detecting directions and magnitudes of accelerations at various positions caused by galloping or vibration of the overhead transmission line, and each of the anti-icing and de-icing devices based on sudden change of center of gravity or the anti-icing and de-icing spacer acts based on the directions and the magnitudes of the accelerations.
